# FASCICULE DE BREVET EUROPEEN

(11) **EP 2 585 871 B1**
(45) Date de publication et mention de la délivrance du brevet: **05.12.2018**
(21) Numéro de dépôt: 11738760.5
(22) Date de dépôt: 27.06.2011
(51) Int. Cl.: G02F 1/1345, B32B 17/10

(54) **PROCÉDÉ DE FABRICATION D'UN VITRAGE FEUILLETÉ À DIFFUSION VARIABLE PAR CRISTAUX LIQUIDES ET VITRAGE FEUILLETÉ AINSI OBTENU**
VERFAHREN ZUR HERSTELLUNG EINER LAMINIERTEN GLASIERUNG MIT VARIABLER DIFFUSION VON FLÜSSIGKRISTALLEN UND DAMIT HERGESTELLTE LAMINIERTE GLASIERUNG
METHOD OF MANUFACTURING A LAMINATED GLAZING WITH VARIABLE DIFFUSION BY LIQUID CRYSTALS AND LAMINATED GLAZING OBTAINED BY THIS METHOD

(30) Priorité: 25.06.2010 FR 1055103
(43) Date de publication de la demande: 01.05.2013
(73) Titulaire: Saint-Gobain Glass France, 92400 Courbevoie (FR)
(72) Inventeur: KUJAWA, Jean, F-95570 Attainville (FR); VILA, Serge, F-02200 Soissons (FR)
(74) Mandataire: Saint-Gobain Recherche
(86) Numéro de dépôt international: PCT/FR2011/051480
(87) Numéro de publication internationale: WO 2011/161391

(56) Documents cités:
- EP-A1- 1 653 275
- EP-A2- 0 630 170
- GB-A- 2 296 479
- US-B1- 6 317 248

## Description

L'invention se rapporte au domaine des vitrages électrocommandables à propriétés optiques variables et plus particulièrement concerne un vitrage feuilleté à diffusion variable par cristaux liquides son procédé de fabrication et le dispositif pour sa fabrication.

On connait des vitrages dont certaines caractéristiques peuvent être modifiées sous l'effet d'une alimentation électrique appropriée, tout particulièrement la transmission, l'absorption, la réflexion dans certaines longueurs d'ondes du rayonnement électromagnétique, notamment dans le visible et/ou dans l'infrarouge, ou encore la diffusion lumineuse.

On cherche notamment à contrôler le degré de vision à travers des vitrages, notamment réduire voire de l'empêcher totalement pendant un certain temps.

Un vitrage à diffusion lumineuse variable dont le principe de fonctionnement est connu est un vitrage à cristaux liquides. Il est basé sur l'utilisation d'un film placé entre deux couches conductrices formant les électrodes et à base d'une matière polymérique dans laquelle sont dispersées des gouttelettes de cristaux liquides, notamment nématiques à anisotropie diélectrique positive. Les cristaux liquides, quand le film est mis sous tension, s'orientent selon un axe privilégié, ce qui autorise la vision. Hors tension, en l'absence d'alignement des cristaux, le film devient diffusant et empêche la vision. Des exemples de tels films sont décrits notamment dans les brevets européens EP1653275 et EP0238164, et les brevets américains US4435047, US4806922, US4732456. Ce type de film, une fois feuilleté et incorporé entre deux substrats en verre, est commercialisé par la société SAINT-GOBAIN GLASS sous la dénomination commerciale Privalite.

Ces vitrages Privalite sont utilisés comme cloisons internes entre deux pièces, dans un bâtiment, ou entre deux compartiments, dans un moyen de locomotion du type train ou avion. Ils servent aussi pour les rétroviseurs de véhicules, qui, en s'obscurcissant en cas de besoin, peuvent éviter l'éblouissement du conducteur. Avec un état suffisamment diffusant ils sont aussi utilisés en tant qu'écrans de projection.

Le vitrage Privalite connu est un vitrage incorporant le système à cristaux liquides entre deux verres feuilletés par des intercalaires en EVA. Deux câbles électriques comportent chacun une entrée de câblage liée à une connectique d'électrode distincte.

Pour éviter une électrocution lors de manipulations, chaque entrée de câble est noyée dans un bossage en une colle thermofusible (hot melt adhesive en anglais) à base de polyoléfine appliqué à chaud avec un pistolet.

La présente invention a pour but d'améliorer la fiabilité du vitrage feuilleté à diffusion variable par cristaux liquides, à moindre coût, de façon simple et à long terme.

A cet effet la présente invention propose un vitrage feuilleté à diffusion variable par cristaux liquides tel que revendiqué par la revendication 11 ci-jointe. Ce vitrage feuilleté comprend :
- une première feuille de verre,
- un premier film intercalaire de feuilletage de la première feuille de verre, en une première matière plastique, notamment thermoplastique,
- un système électrocommandable à diffusion variable comportant les cristaux liquides entre un premier support d'une première électrode et un deuxième support d'une deuxième électrode, les première et deuxième électrodes étant en contact avec les cristaux liquides,
- un deuxième film intercalaire de feuilletage en une deuxième matière plastique, notamment thermoplastique, notamment du type de la première, d'une deuxième feuille de verre,
- des première et deuxième connectiques respectivement de la première et de la deuxième électrode,
- un câblage électrique avec deux entrées de câblage une première entrée de câblage liée à la première connectique et une deuxième entrée de câblage liée à la deuxième connectique, notamment connectiques dépassantes au moins du bord des supports voire du chant du vitrage,
- une matière polymérique de protection des première et deuxième entrées de câblage, en contact avec les première et deuxième feuilles de verre, notamment avec l'un ou les chants des première et deuxième feuilles de verres, sur tout au partie du ou des chants desdits verres,
- un moyen d'étanchéité à l'eau des cristaux liquides et des première et deuxième électrodes, par exemple comprenant la première et la deuxième matière plastique, la matière polymérique de protection forme un moyen d'étanchéité à l'eau liquide, voire vapeur, des première et deuxième connectiques d'électrodes et des première et deuxième entrées de câblage.

Dans l'art antérieur la colle thermofusible en polyoléfine adhère mal au verre, il en résulte :
- la création de chemins préférentiels de diffusion de l'eau liquide entre la résine et le verre endommageant les connectiques et, par propagation, les entrées des câbles,
- des problèmes d'arrachement fréquents des câbles lors de la pose du vitrage.

La matière polymérique de protection selon l'invention adhère suffisamment aux verres et aux première et deuxième matières plastiques. Il n'est pas non plus nécessaire de rajouter de couche(s) (mince(s)) d'accrochage sur la surface de(s) verre(s) pour renforcer l'adhésion.

La matière de protection selon l'invention garantit donc l'étanchéité à l'eau liquide, voire même vapeur, des connectiques et des entrées de câblage, étanchéité notamment très stricte dans les milieux humides (salle de bain, etc).

Comme applications en zone humide (inondable etc), on peut citer :
- une pièce d'eau (séparée ou faisant partie d'une chambre ou tout autre pièce), une laverie, une buanderie, dans une salle de bains, une douche, notamment comme sol, paroi, cloison, porte (éventuellement coulissante), fenêtre de façade ou fenêtre intérieure,
- une piscine, dalle (de sol), paroi (murale), fenêtre, cabine d'essayage,
- une façade de bâtiment (vitrine, fenêtre notamment en rez-de-chaussée, de jardin) dans les zones inondables etc,
- un vitrage de signalisation routière, urbaine ou côtière, dans les zones inondables etc, dans une rue proche ou en bord de mer, d'une rivière, d'un fleuve...,
- un bateau.

La matière de protection selon l'invention assure aussi un meilleur maintien mécanique du câblage électrique, limitant les risques d'arrachement au verre et participe à l'isolation électrique des connectiques et entrées de câblage, éventuellement en combinaison avec les matières plastique de feuilletage.

La matière de protection et les première et deuxième matières plastiques peuvent être avantageusement transformées par cycle thermique notamment en étuve :
- transformations successives pendant deux cycles thermiques (notamment en étuve),
- ou de manière avantageuse transformation simultanée (phases simultanées ou concordantes de ramollissement, de collage, de liquéfaction et de préférence de réticulation) pendant un cycle thermique (notamment en étuve).

Le vitrage est alors à la fois plus fiable, plus simple et rapide à fabriquer.

La matière de protection ainsi mise en oeuvre est préférable à un cordon extrudé. L'extrusion d'un cordon serait une étape lourde à mettre en oeuvre en production (étape supplémentaire d'application du cordon de colle extrudé immergeant le câble, séchage) et l'adhésion n'est pas garantie.

La matière de protection est préférable aussi à une solution qui consisterait en un cadre rigide prémonté renfermant le câblage immergé dans une colle.

La matière de protection peut être avantageusement réticulée, notamment former un réseau tridimensionnel pour renforcer l'étanchéité à l'eau liquide, voire vapeur.

La matière de protection et les matières plastique de feuilletage sont de préférence de même nature, donc (essentiellement) à base d'un ou plusieurs polymères identiques ou similaires.

Les matières plastique notamment thermoplastiques de feuilletage peuvent être un polymère organique d'assemblage du type éthylène-vinyl acétate (EVA) ou encore polyvinylbutyral (PVB), ou certains polyuréthanes (PU).

La matière de protection, la première matière et de préférence la deuxième matière plastique notamment thermoplastique peuvent en particulier être à base d'éthylène-vinyl acétate, notamment réticulé, la première matière et la deuxième matière plastique notamment thermoplastique (PVB, EVA de préférence ...) étant prolongées par la matière de protection formant ainsi une continuité de matière(s) (plastique).

Si la matière de protection entoure complètement le vitrage, il n'est pas nécessaire que les première et deuxième matières plastique, notamment thermoplastique, de feuilletages, forment une continuité de matière(s) avec la matière de protection afin de préserver l'étanchéité latérale (suppression du passage de l'eau par les cotés).

On peut en outre prévoir d'ajuster l'épaisseur de la matière de protection au niveau des entrées de câblage en limitant la surépaisseur, ajustement réalisable plus finement que par la résine « hot melt » injectée de l'art antérieur.

La matière de protection peut présenter une surface dite externe orientée vers l'extérieur du vitrage qui est moulée.

La surface externe peut être plane, lisse ou volontairement rainurée, dentelée. Elle peut former un profilé notamment pour une économie de matière, en étant bombée vers l'extérieur par exemple.

La matière de protection peut en outre améliorer la tenue mécanique et le maintien du câble et faciliter l'installation du vitrage notamment lorsque le vitrage est glissé dans un dormant.

Le câblage électrique peut comprend un (seul) câble qui sur au moins une partie de sa longueur située au-delà d'une zone d'entrée du câble (zone de câble sans gaine) comporte une gaine (la gaine interne ou la gaine externe classique du câble) en contact avec la matière de protection et figée dans la matière de protection (voire immergée dans cette matière) voire figée aussi dans la première et/ou deuxième matière plastique notamment thermoplastique, notamment une gaine en polychlorure de vinyle (PVC) qui adhère particulièrement bien à l'EVA.

Le PVC a une bonne adhésion avec l'EVA. On évite à l'inverse une matière anti-adhérente notamment une composition fluorée (le téflon donc le polytétrafluoroéthylène etc), notamment pour une matière de protection en EVA.

On peut prévoir en alternative une gaine suffisamment collée avec la matière de protection pour immobiliser le câblage au mieux et éviter l'arrachement.

L'épaisseur de matière de la protection est par exemple sensiblement égale au diamètre du câble, par exemple de l'ordre de 5 mm.

Le câblage électrique peut en outre comprendre un (seul) câble s'étendant le long du chant du vitrage, notamment le long d'un seul bord de chant. Et sur au moins une partie de sa longueur située au-delà d'une zone d'entrée du câble, le câble, avec ou sans gaine externe, est recouvert, notamment immergé, dans ladite matière de protection voire dans la première et/ou la deuxième matière plastique notamment thermoplastique.

De préférence, le câble est recouvert tout le long du vitrage pour sa protection et/ou son immobilisation.

Le câblage électrique peut comprendre (alternativement ou cumulativement) un câble s'étendant le long d'une gorge périphérique entre les première et deuxième feuilles de verre. Et sur au moins une partie de sa longueur située au-delà de la zone d'entrée du câble, le câble, avec ou sans gaine externe, est recouvert, notamment immergé, dans ladite matière de protection voire dans la première et/ou la deuxième matière plastique notamment thermoplastique.

De préférence, le câble est recouvert tout le long de la gorge du vitrage pour sa protection et/ou son immobilisation.

On peut donc pratiquer une gorge entre les verres en ménageant un décrochement sur au moins l'un des verres et insérer le câblage dans cette gorge, le câblage étant alors affleurant ou en retrait du chant du vitrage.

Le ou les câbles du câblage peut sinon être le long de bord(s) du chant du vitrage : contre le chant ou espacé du chant (facilitant l'immersion du câblage).

De manière avantageuse, le câblage électrique peut comporter un (seul) câble fixé dans une position déterminée unidirectionnelle (notamment linéaire, notamment le long du chant ou de la gorge) au moins en dehors de l'entrée de câble couverte de la matière de protection (voire immergée dedans).

De préférence, le câble est unidirectionnel tout le long (de la gorge) du vitrage pour sa protection et/ou son immobilisation (hors zone d'entrée et/ou de sortie avec le cas échéant).

Le caractère unidirectionnel peut être facilité par la matière de protection qui peut initier une direction privilégiée dans la zone d'entrée de câblage. La matière de protection peut même s'étendre au-delà de cette zone d'entrée pour guider le câble.

On préfère ainsi ne pas former de U (et de préférence de L), même après branchement avec l'alimentation électrique générale (secteur ...).

Cela évite ainsi toute détérioration du câble par pliage, lors du transport, ou de l'installation, comme de la désinstallation (réparation etc).

Aussi, dans une première configuration unidirectionnelle, le câblage électrique comprend un (seul) câble dont l'entrée est au niveau du bord susceptible d'être, après montage du vitrage, le bord supérieur ou respectivement inférieur (position par rapport au sol) du chant du vitrage ou d'une gorge périphérique entre les première et deuxième feuilles de verre, et en dehors de la zone du câble immergée notamment dans la matière de protection, le câble est unidirectionnel, vers l'alimentation électrique (générale), notamment au plafond ou respectivement au sol.

Aussi, dans une deuxième configuration unidirectionnelle (alternative ou cumulative), le câblage électrique comprend un (seul) câble dont l'entrée est au niveau du bord susceptible d'être, après montage du vitrage, le bord latéral du chant du vitrage ou d'une gorge périphérique entre les première et deuxième feuilles de verre, et en dehors de la zone du câble immergée notamment dans la matière de protection, le câble est unidirectionnel.

Dans un vitrage à coins, le bord latéral est autrement dit vertical (après montage), et est plus long, égal ou plus court que le bord horizontal.

De préférence ainsi, le câble suit un seul bord.

On peut simplifier encore le vitrage en formant des connectiques d'électrodes rapprochées et en outre limiter de préférence les longueurs de câblage. On laisse ainsi un espace suffisant pour éviter un échauffement des liaisons entrées de câbles - parties externes, par exemple par soudure.

Dans une conception préférée, la matière de protection voire la première et/ou la deuxième matière plastique notamment thermoplastique couvre de manière continue les première et deuxième connectiques et l'espace entre les première et deuxième connectiques, notamment sous forme de bandes conductrices dépassantes du vitrage et de préférence disposées sur un seul bord de vitrage.

De préférence les extrémités des première et deuxième connectiques sont espacées d'une longueur dite de séparation, mesurée suivant le plan principal du vitrage, supérieure ou égale à 10 cm, voire supérieure ou égale à 15 cm, notamment inférieure à 30 cm.

La résine thermofusible de l'art antérieur ne permet pas un unique bossage fiable car en augmentant la longueur d'un bossage cela favoriserait encore davantage l'arrachement du bossage du vitrage.

La matière de protection peut elle être donc localisée (au moins) dans la seule zone avec les connectiques rapprochées plutôt que dans deux zones comme dans l'art antérieur. Typiquement, la matière est de longueur (légèrement) supérieure à la longueur de la zone, par exemple d'au moins 1 cm voire de 2 cm de plus de chaque côté des connectiques.

Dans une conception préférée, le câblage sort du vitrage, sans couverture par la matière de protection, dans une unique zone notamment une zone d'un seul bord du chant, et de préférence le câblage est constitué d'un unique câble bi-brins.

Il est en outre possible de masquer le câblage par la matière de protection choisie opaque par exemple d'un blanc laiteux par ajout si nécessaire d'additifs dans la matière de protection.

Dans un premier mode de réalisation, la matière de protection est le long d'au moins un (seul) bord du chant et/ou le long d'une gorge périphérique entre les première et deuxième feuilles de verre.

Dans un deuxième mode de réalisation, pour éviter une surépaisseur locale (ou même une épaisseur de joint sur le chant) et/ou pour une protection du câblage et/ou pour une protection du chant du vitrage, notamment des coins :
- la matière de protection peut être sur tout le pourtour du chant du vitrage et la matière de protection est de préférence exempte d'un entourage externe notamment opaque (cadre rigide, baguette, menuiserie...),
- et/ou la matière de protection est dans une gorge périphérique entre les première et deuxième feuilles de verre encadrant le vitrage et incluant le câblage.

Cela procure une finition satisfaisante nécessaire pour les installations bord à bord et les installations du vitrage en porte. Par ailleurs le moulage complet pour amortir les chocs, notamment protéger les coins de vitrage, sans nécessité d'un cadre supplémentaire (menuiserie etc).

On peut préférer une matière de protection transparente comme l'EVA notamment si elle est visible, par exemple dans les applications de porte.

Cela permet en outre de renforcer voire même de remplacer l'étanchéité des cristaux liquides et des électrodes fournie par les feuilles intercalaires.

La section de la matière de protection formant un élément d'étanchéité à l'eau liquide et/ou sa dimension latérale n'est pas forcément identique sur tout le pourtour. Par exemple la dimension latérale peut être plus grande au niveau du câblage électrique.

On choisit par exemple le long du chant du vitrage une première épaisseur limitée à 0,5 mm pour hors entrée(s) de câblage et de l'ordre de 1,5 mm pour l'entrée(s) de câblage et voire la zone de câblage le long du chant. Pour chacune des zones l'épaisseur peut être sensiblement constante.

Par ailleurs, dans une conception de l'invention, l'entrée de câblage est le long du chant, la matière de protection peut être formée à partir du premier film intercalaire débordant de la première feuille de verre (notamment repliée pour entourer le câblage) et par exemple d'au moins 7 mm encore plus préférentiellement entre 5 et 15 mm.

Naturellement, le deuxième film intercalaire peut participer de préférence à la formation de l'étanchéité, et par exemple est en EVA. Il peut déborder de la deuxième feuille de verre (et être replié pour entourer le câblage avec le premier film intercalaire) par exemple d'au moins 7 mm encore plus préférentiellement entre 5 et 15 mm.

Par ailleurs, un (premier et/ou deuxième) film intercalaire débordant d'au moins 3 mm peut suffire pour la ou les zones du chant du vitrage sans câblage (dans le cas d'une matière de protection sur tout le pourtour, notamment par moulage).

Par ailleurs, le moyen d'étanchéité à l'eau (liquide et vapeur) des cristaux liquides et des première et deuxième électrodes est de préférence réalisé par l'encapsulation périphérique formée par la première et la deuxième matière thermoplastique.

Pour éviter tout disfonctionnement électrique de type court circuit, ou mise à la masse des électrodes ou des bus bar, les verres sont de préférence débordants des supports par exemple d'au moins 3 mm.

Il n'est pas nécessaire que la deuxième matière plastique notamment thermoplastique soit de même nature que la première matière plastique notamment thermoplastique tant que ces matières adhèrent bien entre elles. Naturellement en prenant une nature semblable ou identique, cela est plus simple.

On peut en outre envisager diverses configurations d'amenées de courant (bus bar) :
- une première bande d'amenée de courant, notamment un clinquant métallique, le long d'un premier bord (latéral ou vertical du premier ou deuxième support (avec des coins : rectangulaire, carré...) et une deuxième bande d'amenée de courant le long d'un bord opposé ou adjacent au premier bord,
- une première bande d'amenée de courant, notamment un clinquant métallique, le long d'un premier bord (latéral ou vertical du premier ou deuxième support (avec des coins : rectangulaire, carré...) et une deuxième bande d'amenée de courant le long d'un même bord.

On peut envisager diverses configurations de câblage :
- câblage (un ou plusieurs câbles) le long d'un seul bord (latéral ou longitudinal) du chant du vitrage ou sur deux bords adjacents ou opposés du chant du vitrage.

Le premier et/ou le deuxième support est transparent. Il peut être choisi rigide ou semi-rigide, par exemple être en verre, polymère acrylique du type polyméthacrylate de méthyle PMMA ou en polycarbonate PC. Il peut aussi être flexible, notamment en polyéthylène téréphtalate PET ou à base de certains polycarbonates flexibles.

On peut avoir ainsi une structure du type PET / couche électroconductrice type ITO / polymère / couche électroconductrice type ITO / PET, qui se présente sous la forme d'une feuille souple aisément manipulable.

On peut en fait utiliser tous les systèmes à cristaux liquides connus sous les termes de « NCAP » (Nematic Curvilinearly Aligned Phases en anglais) ou « PDLC » (Polymer Dispersed Liquid Cristal en anglais) ou « CLC » (Cholesteric Liquid Cristal en anglais) ou NPD-LCD (Non-homogenous Polymer Dispersed Liquid Crystal Display en anglais).

Ceux-ci peuvent en outre contenir des colorants dichroïques, notamment en solution dans les gouttelettes de cristaux liquides. On peut alors conjointement moduler la diffusion lumineuse et l'absorption lumineuse des systèmes.

On peut également utiliser, par exemple, les gels à base de cristaux liquides cholestériques contenant une faible quantité de polymère réticulé, comme ceux décrits dans le brevet WO-92/19695. Plus largement, on peut donc choisir des « PSCT » (Polymer Stabilized Cholesteric Texture en anglais).

Naturellement le système à cristaux liquides peut s'étendre sensiblement sur toute la surface du vitrage (hors emmargeage), ou sur (au moins) une zone restreinte. Le système à cristaux liquides peut être discontinu, en plusieurs morceaux (par exemple de type pixels).

Dans les zones humides précitées comme ailleurs, le vitrage selon l'invention peut être utilisé (aussi) :
- comme cloison interne (entre deux pièces ou dans un espace) dans un bâtiment, dans un moyen de locomotion terrestre, aérien, aquatique (entre deux compartiments, dans un taxi etc),
- comme porte vitrée, fenêtre, plafond, dallage (sol, plafond),
- comme rétroviseur de véhicule, vitrage latéral, toit d'un moyen de locomotion terrestre, aérien, aquatique,
- comme écran de projection,
- comme façade de magasin, vitrine notamment d'un guichet.

Naturellement, le vitrage selon l'invention peut former tout ou partie d'une cloison et autre fenêtre (type imposte etc), d'un vitrage multiple (par rajout d'un vitrage supplémentaire).

Le vitrage à cristaux liquides selon l'invention peut être plan ou bombé, notamment cylindrique, par exemple une paroi d'une cabine de douche.

Le ou les verres sont de préférence sensiblement transparents sur tout ou partie de leur surface. Ils peuvent être éventuellement teintés. On peut prévoir un miroir périphérique, sur le cadre du vitrage ou sur les bords, ou encore un sablage ou une sérigraphie (face 1 et 4) pour par exemple faire un logo.

Les électrodes peuvent être sous forme de couches électroconductrices, par exemple continues, déposées directement sur les supports.

Ainsi, la présente invention a aussi pour objet un procédé de fabrication d'un vitrage feuilleté à diffusion variable par cristaux liquides tel que revendiqué par la revendication 1 ci-jointe, procédé dans lequel :
- on fournit une structure comprenant :
   - la première feuille de verre,
   - le premier film intercalaire de feuilletage en la première matière plastique, notamment thermoplastique,
   - le système électrocommandable à diffusion variable comportant les cristaux liquides entre le premier support de la première électrode et le deuxième support de la deuxième électrode, les première et deuxième électrodes étant en contact avec les cristaux liquides,
   - le deuxième film intercalaire de feuilletage en la deuxième matière plastique, notamment thermoplastique, du type de la première,
   - la deuxième feuille de verre,
   - le câblage électrique d'alimentation électrique avec la première entrée de câblage liée à la première connectique et la deuxième entrée de câblage liée à la deuxième connectique,
- on forme le moyen d'étanchéité à l'eau liquide des première et deuxième connectiques d'électrodes et des première et deuxième entrées de câblage par les étapes suivantes :
- on insère la matière polymérique plastique de protection, (sous toute forme : languette, bille...) dans un moule de surface interne, dite de moulage en regard des première et deuxième entrées de câblage,
- on place l'ensemble dans un système étanche au vide, on procède à un chauffage fluidifiant de la matière polymérique de protection de sorte que la matière polymérique de protection épouse la surface de moulage et entre en contact avec les première et deuxième feuilles de verre, de préférence au moins un chant du ou des verres.

Le moulage permet de choisir à façon dimensions et formes de la matière de protection.

Avec le moule, la matière polymérique de protection va en effet se répandre de façon contrôlée. On vient ainsi forcer la répartition de la matière en utilisant un moule de forme complémentaire à la forme souhaitée pour l'étanchéité, voire pour la protection mécanique du câblage.

Le moule est de préférence de hauteur supérieure à la hauteur totale du vitrage. (autrement dit l'épaisseur totale du vitrage).

Lorsque le moulage est antérieur au feuilletage, on conserve de préférence le moule (ou on place un autre élément adapté) sur le pourtour du vitrage pendant le feuilletage car alors si la matière plastique, notamment thermoplastique, de feuilletage déborde en fluant, elle est alors contenue par le moule (ou d'un autre élément adapté).

Selon l'invention on peut limiter la taille des films polymériques intercalaires, notamment en cas de moulage complet qui assure alors l'étanchéité de l'ensemble des éléments internes entre les feuilles du vitrage.

Les deux verres peuvent être décalés d'une façon non contrôlée lors de l'assemblage. Cela crée une disparité de dimensions qui est problématique pour l'installation et peut même conduire au rebut.

Lorsque le moulage est antérieur au feuilletage, on conserve le moule sur le pourtour du vitrage pendant le feuilletage pour supprimer cet inconvénient.

En effet, en ceinturant le vitrage avec le moule, on réaligne les verres dès lors que leurs tranches viennent en butée contre le moule.

Ainsi,
- l'étanchéité est garantie,
- le décalage des verres est limité,
- la finition du bord sera contrôlée au choix selon la forme du moule (carré, arrondi, etc.),
- l'esthétisme est garanti.

De manière préférée, pour une rapidité et une simplicité de fabrication et pallier les inconvénients précités, ledit chauffage fluidifie en outre la première et la deuxième matière plastique, notamment thermoplastique, pour réaliser le feuilletage de préférence pendant le même cycle thermique, et éventuellement la matière de protection entre en contact avec les première et deuxième matières plastique, notamment thermoplastiques.

On préfère de la matière plastique ne nécessitant pas un passage en autoclave pour ne pas risquer de dégrader les cristaux liquides, mais dont un simple chauffage suffit. C'est pourquoi on préfère l'EVA pour la matière de protection et éventuellement pour les première et deuxième matières plastique, notamment thermoplastique (si on veut une continuité de matières notamment). En outre, l'EVA a une capacité de fluage suffisante et de préférence réticulable (par insertion d'agent(s) de réticulation) lors et/ou à partir du passage en étuve.

De préférence :
- pour son maintien : le moule est le long du chant du vitrage et en appui sur le vitrage au moins par une face externe de la première feuille et éventuellement en butée contre le chant du vitrage et/ou le moule ceinture le pourtour du vitrage,
- pour le passage du câblage : le moule est ouvert ou percé de trou(s) sur sa paroi en regard du chant du vitrage pour sortir le câblage et/ou le moule est ouvert latéralement sur au moins un côté pour sortir le câblage, et de préférence les bords latéraux du moule sont obturés notamment par du tissu ou du scotch (bande adhésivée).

Le moule (par exemple avec une section en L) peut en outre être en appui seulement sur un bord de la face externe principale de la première feuille et une enveloppe (textile, etc) est disposée sur un bord de la face externe principale de la deuxième feuille et s'étend sur le moule.

La matière de protection est facilement insérable entre le moule et le bord de la deuxième feuille.

En outre, un même moule ouvert (en L...) peut servir pour des épaisseurs de verre différentes, donc le stock de moules est plus simple à gérer.

En concevant le moule d'une façon appropriée, on peut créer une dimension supplémentaire en dehors du verre. Cela permet :
- de solidifier l'entrée du câblage et voire l'ensemble du câblage (améliorant la résistance à l'arrachement),
- de guider le câblage suivant une direction.

L'invention prévoit enfin un moule pour la mise en oeuvre du procédé de fabrication du vitrage feuilleté à diffusion variable par cristaux liquides défini précédemment.

Le moule peut présenter une surface anti-adhérente à la matière polymérique de protection, notamment choisie parmi le téflon donc le polytétrafluoroéthylène, la silicone.

Le moule peut avoir une section :
- en L comme déjà vu,
- ou en C : la matière de protection aura une forme (symétrique) de C avec des angles lisses.

Avec une gorge entre les verres, on peut insérer le câblage dans cette gorge. Eventuellement la surface de moulage est alors entre les faces internes des verres, ce qui offre plusieurs avantages :
- suppression du risque de fluage des verres débordants,
- obtention d'une matière de protection non débordante (par exemple affleurante au chant),
- renforcement de la protection du câblage,
- réduction de la dimension latérale du vitrage.

D'autres détails et caractéristiques de l'invention apparaîtront de la description détaillée qui va suivre, faite en regard des dessins annexés sur lesquels :
- la figure 1 représente une vue partielle et schématique en coupe latérale du vitrage à cristaux liquides feuilleté Privalite de l'art antérieur;
- la figure 2 représente une vue partielle et schématique en coupe latérale de la fabrication du vitrage Privalite de l'art antérieur montré en figure 1,
- la figure 3 représente une vue partielle et schématique en coupe latérale de la fabrication d'un vitrage à cristaux liquides feuilleté et étanche à l'eau dans un premier mode de réalisation selon l'invention,
- la figure 4 représente une vue partielle et schématique en coupe latérale du vitrage à cristaux liquides feuilleté et étanche à l'eau dans ce premier mode de réalisation selon l'invention,
- la figure 5 représente une vue partielle et schématique en coupe latérale de la fabrication d'un vitrage à cristaux liquides feuilleté et étanche à l'eau dans un deuxième mode de réalisation selon l'invention,

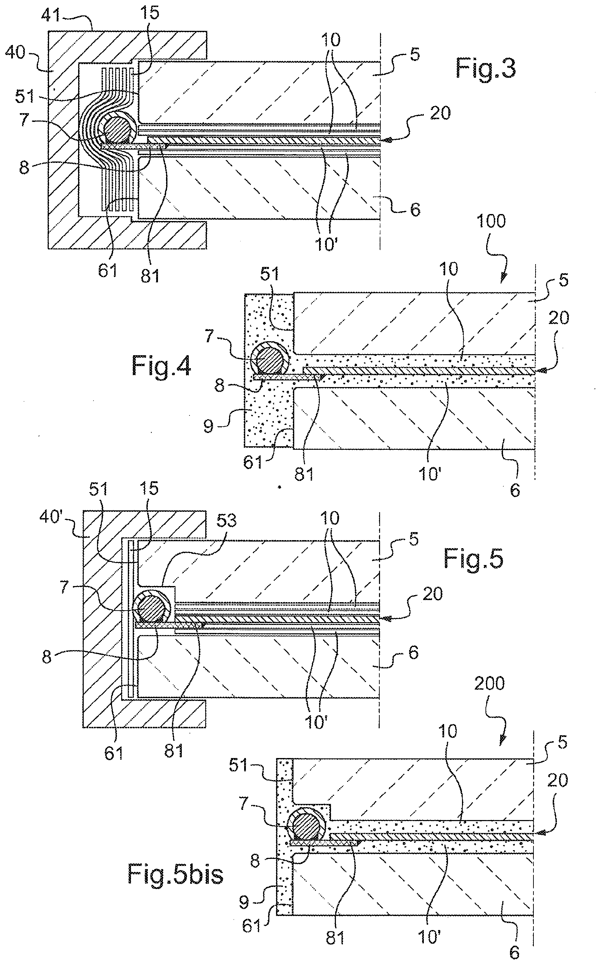

- la figure 5bis représente une vue partielle et schématique en coupe latérale du vitrage à cristaux liquides feuilleté et étanche à l'eau dans ce deuxième mode de réalisation selon l'invention,

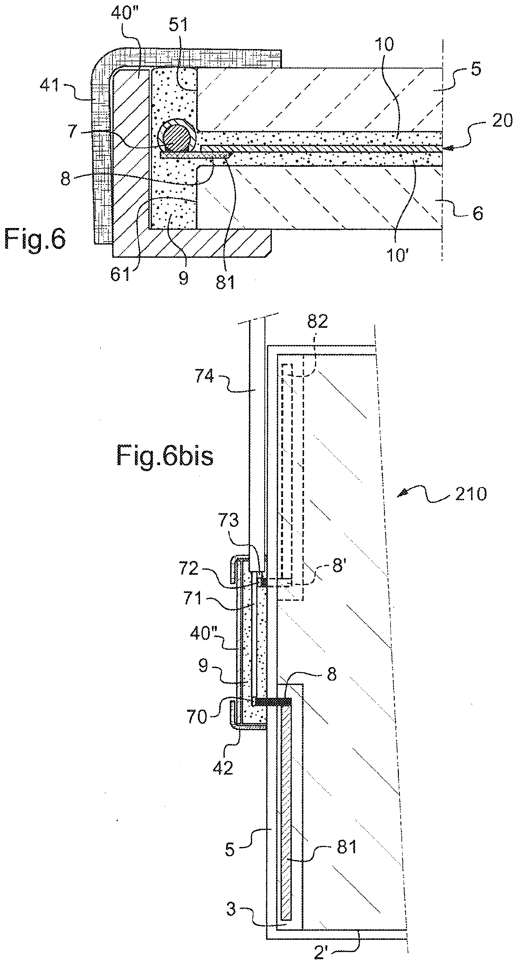

- la figure 6 représente une vue partielle et schématique en coupe latérale de la fabrication d'un vitrage à cristaux liquides feuilleté et étanche à l'eau dans un troisième mode de réalisation selon l'invention,
- la figure 6bis représente une vue partielle et schématique de dessus du vitrage à cristaux liquides feuilleté et étanche à l'eau du troisième mode de réalisation selon l'invention,

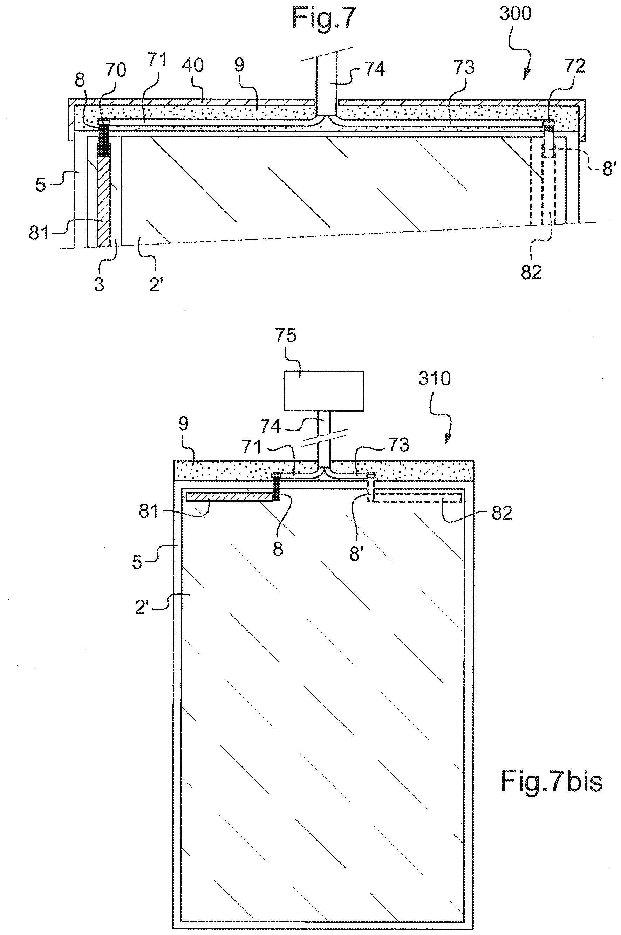

- la figure 7 représente une vue partielle et schématique de dessus d'un vitrage à cristaux liquides feuilleté et étanche à l'eau d'un quatrième mode de réalisation selon l'invention,
- la figure 7bis représente une vue schématique de dessus d'un vitrage à cristaux liquides feuilleté et étanche à l'eau d'un cinquième mode de réalisation selon l'invention,

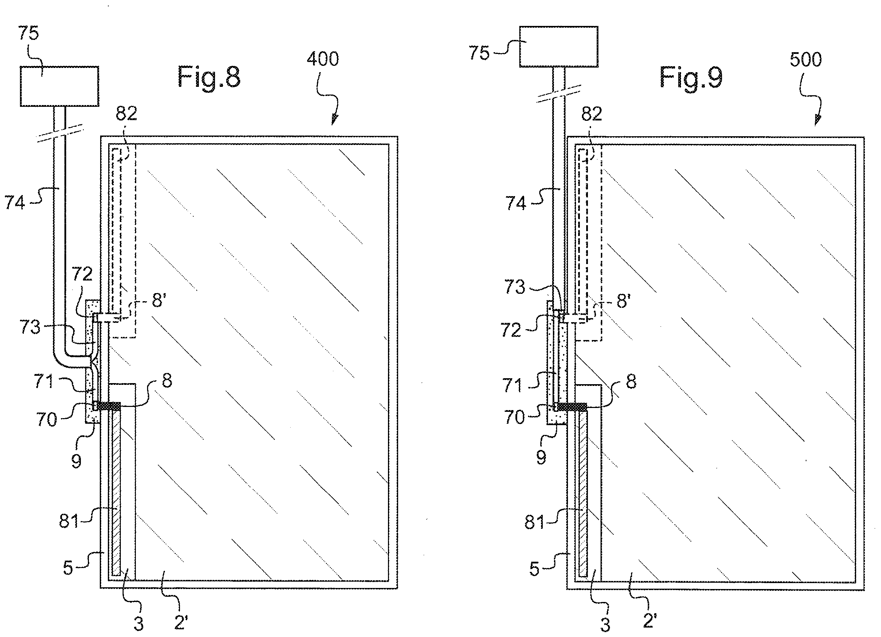

- la figure 8 représente une vue schématique de dessus d'un vitrage à cristaux liquides feuilleté et étanche à l'eau d'un sixième mode de réalisation selon l'invention,
- la figure 9 représente une vue schématique de dessus d'un vitrage à cristaux liquides feuilleté et étanche à l'eau d'un septième mode de réalisation selon l'invention,

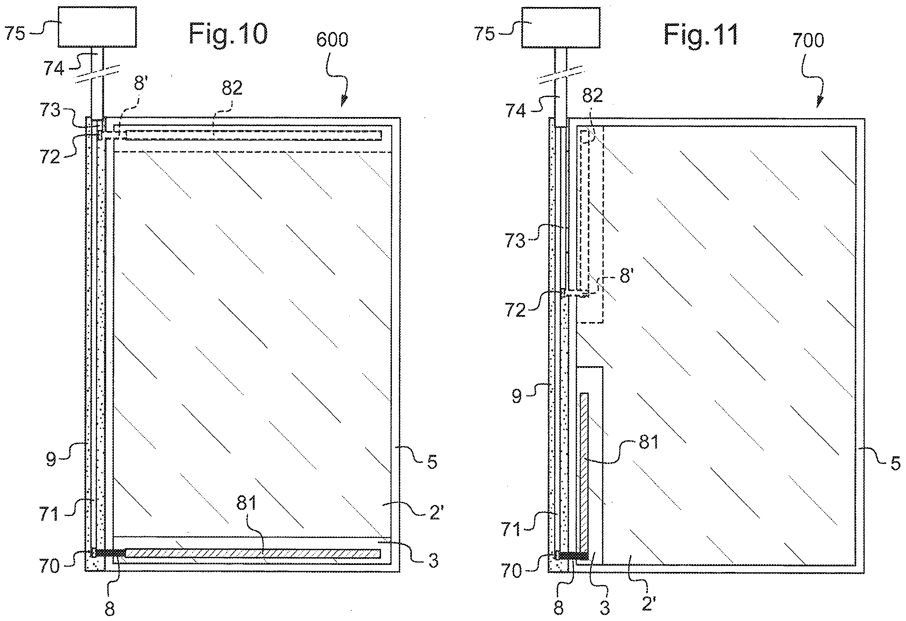

- la figure 10 représente une vue schématique de dessus d'un vitrage à cristaux liquides feuilleté et étanche à l'eau d'un huitième mode de réalisation selon l'invention,
- la figure 11 représente une vue schématique de dessus d'un vitrage à cristaux liquides feuilleté et étanche à l'eau d'un neuvième mode de réalisation selon l'invention,

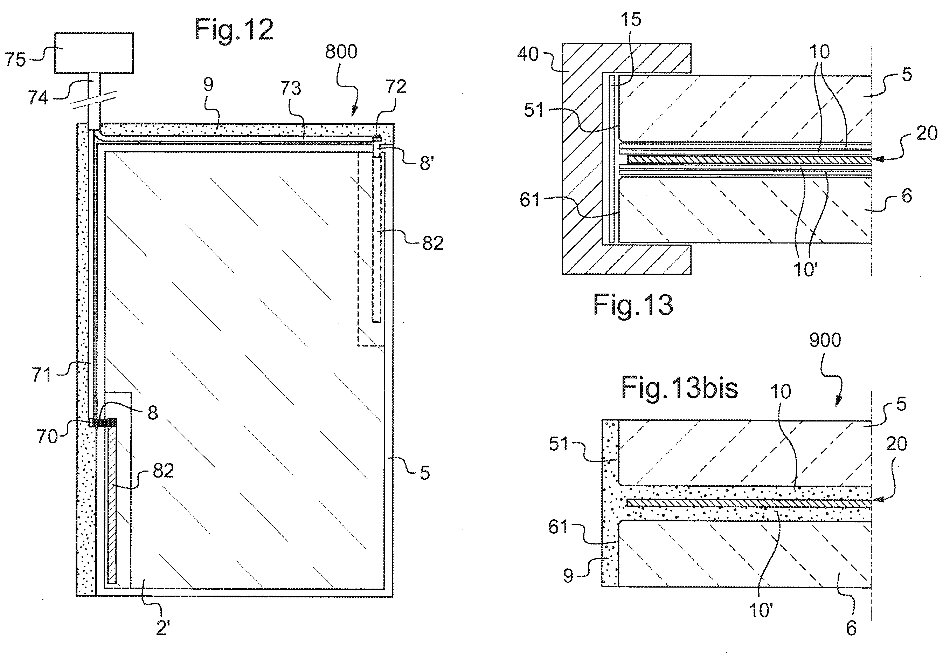

- la figure 12 représente une vue schématique de dessus d'un vitrage à cristaux liquides feuilleté et étanche à l'eau d'un dixième mode de réalisation selon l'invention,
- la figure 13 représente une vue partielle et schématique en coupe latérale de la fabrication d'un vitrage à cristaux liquides feuilleté et étanche à l'eau dans un onzième mode de réalisation selon l'invention,
- la figure 13bis représente une vue partielle et schématique en coupe latérale du vitrage à cristaux liquides feuilleté et étanche à l'eau dans ce onzième mode de réalisation selon l'invention,

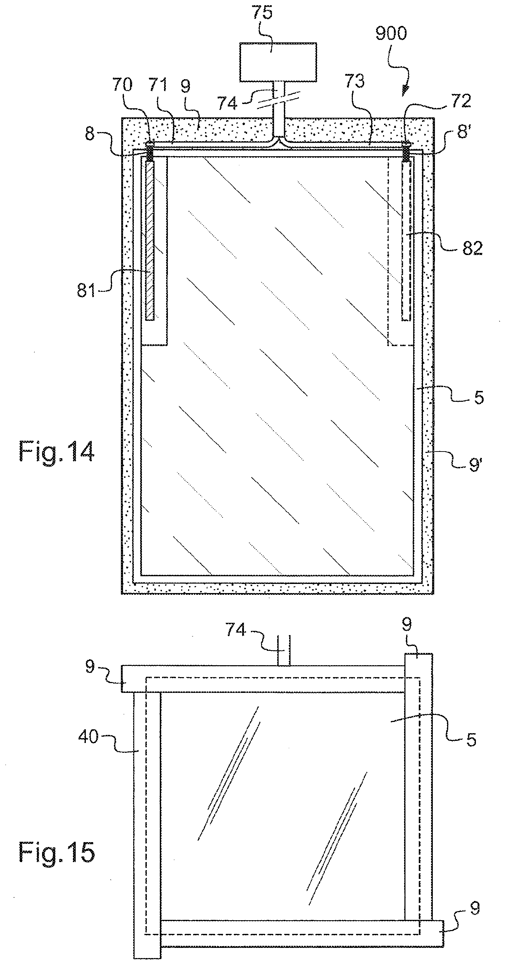

- la figure 14 représente une vue schématique de dessus d'un vitrage à cristaux liquides feuilleté et étanche à l'eau du onzième mode de réalisation selon l'invention,
- la figure 15 représente une vue schématique de dessus de la fabrication du vitrage à cristaux liquides feuilleté et étanche à l'eau du onzième mode de réalisation selon l'invention,

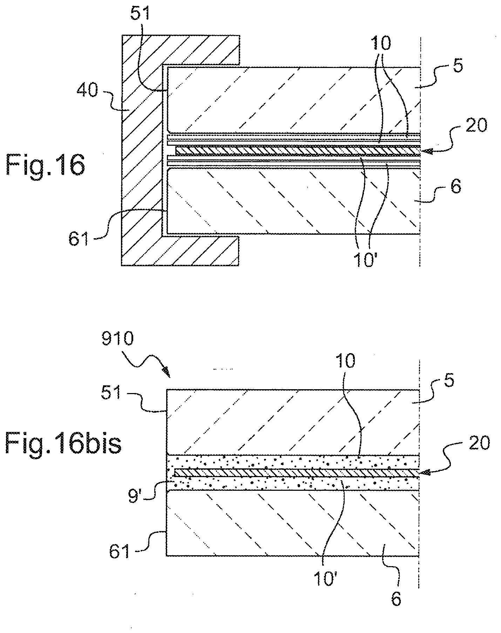

- la figure 16 représente une vue partielle et schématique en coupe latérale de la fabrication d'un vitrage à cristaux liquides feuilleté et étanche à l'eau dans un douzième mode de réalisation selon l'invention,
- la figure 16bis représente une vue partielle et schématique en coupe latérale du vitrage à cristaux liquides feuilleté et étanche à l'eau dans un douzième mode de réalisation selon l'invention.

On précise que par un souci de clarté les différents éléments des objets représentés ne sont pas nécessairement reproduits à l'échelle.

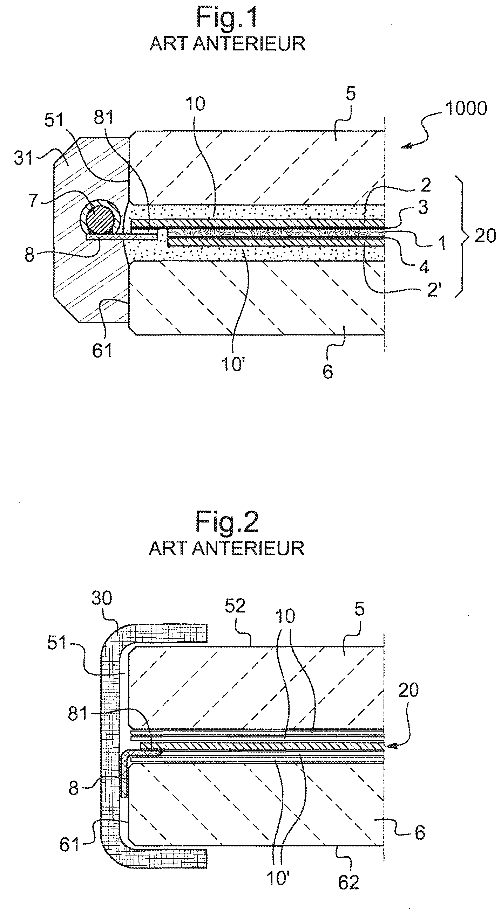

La figure 1 représente un vitrage feuilleté à diffusion variable par cristaux liquides, vitrage connu, dénommé Privalite et qui comprend :
- une première feuille de verre 5 avec un chant 51,
- un premier film intercalaire de feuilletage 10 de la première feuille de verre, en EVA,
- un système électrocommandable à propriétés optiques variable 20 comportant les cristaux liquides en NCAP 1 entre un premier film support en polyéthylène téréphtalate PET 2 d'une première électrode 3 en ITO de résistance par carré égale à 75 Ohms pour 30 nm d'épaisseur et un deuxième film support en PET 2' d'une deuxième électrode en ITO de résistance par carré égale à 75 Ohms pour 30 nm d'épaisseur 4, les première et deuxième électrodes étant en contact avec les cristaux liquides,
- un deuxième film intercalaire de feuilletage en EVA 10' d'une deuxième feuille de verre 6 avec un chant 61.

Plus précisément le système électrocommandable se compose d'un film de polymère transparent, dans lequel ont été préalablement dispersées des micro-gouttes d'un cristal liquide nématique, qui constitue l'émulsion de cristaux liquides d'une épaisseur totale d'une vingtaine de µm, et qui est pris en sandwich entre les deux feuilles de PET de 185 µm d'épaisseur environ revêtues chacune des électrodes.

Les molécules de cristal liquide possèdent plusieurs indices de réfraction : deux indices ordinaires égaux nₒ dans les deux directions perpendiculaires à leur axe de symétrie et un indice extraordinaire nₑ dans l'axe de symétrie. Le polymère est choisi de façon à avoir un indice de réfraction très voisin de l'indice ordinaire nₒ. En l'absence de tension, les axes des différentes gouttes ne sont pas corrélés entre eux. La lumière incidente subit donc, à chaque interface polymère-goutte, une forte réfraction due à la différence d'indice entre le polymère et la goutte dont l'orientation est aléatoire. La lumière est donc diffusée dans toutes les directions.

Sous tension maximum U0, les axes optiques des différentes gouttes s'alignent dans le sens du champ électrique, soit perpendiculairement au vitrage. La lumière incidente, essentiellement normale au vitrage, ne voit plus qu'un milieu d'indice continu np égal à no et n'est plus diffusée.

Les états intermédiaires de flou sont accessibles à la vitesse souhaitée avec des valeurs de tension comprises notamment entre 0 et U0. On utilise pour ce faire un variateur de potentiel (« dimmer » en anglais).

En outre, ce vitrage Privalite comprend :
- pour une première amenée de courant, une première bande électroconductrice 81 sous forme d'un clinquant souple en cuivre (couramment appelé « bus bar ») fixée sur la première électrode, le long du bord du premier film support dépassant du deuxième film support et des cristaux liquides à cet effet,
- une première connectique 8 de la première électrode sous forme d'une languette rigide de laiton fixée par soudure dépassant latéralement du chant du vitrage,
- pour une deuxième amenée de courant, une deuxième bande électroconductrice (non visible) sous forme d'un clinquant souple en cuivre fixée sur la deuxième électrode, le long du bord du deuxième film support dépassant du premier film et des cristaux liquides à cet effet (sur le chant opposé),
- une deuxième connectique 8 de la deuxième électrode sous forme d'une languette rigide de laiton fixée par soudure dépassant latéralement du chant du vitrage.

Le vitrage comprend ensuite :
- un câblage électrique 7 avec deux câbles et donc deux entrées de câblage : une première entrée de câblage 70 liée à la première connectique 8 et une deuxième entrée de câblage (non visible) liée à la deuxième connectique, entrées de câblage sans gaine et soudées sur les languettes 8,
- un premier bossage 31 en contact avec les chants 51, 61 des première et deuxième feuilles de verre et en une colle thermofusible en polyoléfine comme déjà indiqué noyant la première entrée de câblage 7, bossage sur 3,5 cm environ le long du chant du vitrage,
- un deuxième bossage (non visible) en contact avec les chants 51, 61 des première et deuxième feuilles de verre et une colle thermofusible en polyléfine comme déjà indiqué noyant la deuxième entrée de câblage 7, bossage sur 3,5 cm environ le long du chant du vitrage.

Le film de cristaux liquides, les électrodes et les bus bars sont protégés par les feuilles d'EVA plus larges que les feuilles de PET et que le film de cristaux liquides.

Les bossages 31 s'arrachent facilement et n'adhérent pas bien aux verres 5, 6 : en atmosphère humide, les languettes (puis le câblage) sont alors endommagées créant des défaillances électriques.

Les deux bossages 31, générant deux surépaisseurs locales de 5 mm le long du chant, peuvent créer en outre un problème dimensionnel, gênant à l'installation notamment dans les configurations bord à bord.

Jusqu'à présent, comme montré en figure 2, pendant le feuilletage de ce vitrage Privalite une bande en tissu 30 est tendue et entoure le vitrage 1000 sur la tranche pour maintenir les intercalaires en EVA fluant.

Pendant le cycle thermique, les languettes de laitons 8 sont courbées. Et pour que de l'EVA ne vienne pas recouvrir ces languettes, chaque languette est couverte par de l'adhésif. Les languettes de laitons 8 sont décourbées après le feuilletage et le retrait de cette bande et les câbles sont alors soudés et la résine holt melt enrobe les entrées de câblage par injection à chaud.

Ce procédé de fabrication est long et engendre un surcoût.

La finition du bord reste en outre aléatoire, et pouvant poser des difficultés à l'installation.

La figure 3 représente une vue partielle et schématique en coupe latérale de la fabrication d'un vitrage à cristaux liquides feuilleté et étanche à l'eau dans un premier mode de réalisation selon l'invention.

Pour réaliser le vitrage feuilleté à diffusion variable par cristaux liquides, notamment l'étanchéité à l'eau liquide du câblage électrique (et le feuilletage), on effectue les étapes suivantes :
- on fournit une structure comprenant :
   - la première feuille de verre 5, par exemple en verre clair silico-sodo-calcique de 5 mm, rectangulaire, de dimensions 1 m par 2,5 m,
   - le premier film intercalaire de feuilletage 10 en EVA - ici en plusieurs feuilles, par exemple dimensions inférieures ou égales au verre 5,
   - le système électrocommandable à diffusion variable 20 comportant :
      - un premier film support en polyéthylène téréphtalate PET 2 d'une première électrode 3 par exemple d'une couche conductrice transparente (mono ou multicouche) telle que l'ITO de résistance par carré 75 Ohms par carré pour 30 nm d'épaisseur, support décalé de 3 mm du verre 5,
      - un deuxième film support en PET 2' d'une deuxième électrode transparente 4 par exemple une couche conductrice transparente (mono ou multicouche) telle que l'ITO de résistance par carré 75 Ohms par carré pour 30 nm d'épaisseur, support décalé de 3 mm du verre 4,
         les première et deuxième électrodes étant en contact avec les cristaux liquides :
   - le deuxième film intercalaire de feuilletage 10 en EVA, ici en plusieurs feuilles,
   - la deuxième feuille de verre 6 par exemple en verre clair silico-sodo-calcique de 5 mm, rectangulaire, de dimensions 1 m par 2, 5 m.

En outre, comme dans l'art antérieur, le vitrage comprend :
- pour une première amenée de courant, une première bande électroconductrice 81 sous forme d'un clinquant souple en cuivre fixée sur la première électrode, le long du bord du premier film support dépassant du deuxième film support et des cristaux liquides à cet effet,
- une première connectique 8 de la première électrode sous forme d'une languette rigide de laiton fixée par soudure dépassant latéralement du chant du vitrage,
- pour une deuxième amenée de courant, une deuxième bande électroconductrice (non visible) sous forme d'un clinquant souple en cuivre (couramment appelée « bus bar ») fixée sur la deuxième électrode, le long du bord du deuxième film support dépassant du premier film et des cristaux liquides à cet effet (sur le chant opposé),
- une deuxième connectique 8 de la deuxième électrode sous forme d'une languette rigide de laiton fixée par soudure dépassant latéralement du chant du vitrage.

Le vitrage comprend aussi, avant l'étanchéité (voire le feuilletage) un câblage électrique 7 comportant un câble bi-brin (ou deux câbles) avec deux entrées de câblage : une première entrée de câblage 70 liée à la première connectique 8 et une deuxième entrée de câblage (non visible) liée à la deuxième connectique, en fait entrées de câblage sans gaine et soudées sur les languettes 8.

On choisit un ou des câbles d'épaisseur inférieure à celle du vitrage.

Pour une protection de la première entrée de câblage 7, on insère la matière polymérique thermoplastique de protection en EVA de préférence réticulable 15 par des agents tels que peroxyde organique ceci sous forme de bandes - ou en variantes de billes -, dans un moule 40 de surface interne, dite de moulage en regard de cette première entrée de câblage. La largeur des bandes dépend de l'épaisseur des verres utilisés. On préfère recouvrir l'ensemble des chants 51, 61 de l'EVA moulé.

La matière polymérique 15 remplit l'espace entre la surface de moulage 18 et les chants 51, 61.

On met par exemple 4 à 5 bandes d'EVA de 0,4 mm d'épaisseur pour recouvrir l'entrée du câble (dénudé) 8 de section d'âme égale à 0,6 mm², et de diamètre total avec la gaine interne de 2 mm. Le diamètre total avec la gaine externe est de 5,5 mm.

Pour la deuxième entrée de câblage 7, on utilise la même pièce ou une autre pièce de moulage comme détaillé ultérieurement.

Le moule, de section (sensiblement) en C, est le long du chant du vitrage et en appui sur le vitrage par les faces externes des première et deuxièmes feuilles de verres 5, 6 et est en butée contre les chants 51, 61 via des décrochements internes du moule.

Le moule est ouvert latéralement sur au moins un côté pour sortir le câble le long du chant. Pour contenir les bords latéraux du moule sont fermés ou obturés notamment par du tissu ou du scotch (non visible).

Le moule en variante présente une ou des parois latérales percé pour la sortie de câblage.

Le moule présente une surface non adhésive à l'EVA, par exemple en téflon donc le polytétrafluoroéthylène.

On place l'ensemble dans une poche étanche au vide. On met sous vide primaire, afin de dégazer l'EVA (élimination des bulles ...) et on chauffe au-dessus de 100°C pour fluidifier la matière polymérique de protection EVA de sorte que la matière EVA épouse la surface de moulage et entre en contact les chants 51, 61 et pour débuter la réticulation de l'EVA.

Cela forme ainsi le moyen d'étanchéité à l'eau liquide des première et deuxième connectiques d'électrodes 8 et des première et deuxième entrées de câblage 8.

Dans cette réalisation, ce chauffage fluidifie en outre la première et la deuxième matière d'intercalaire en EVA pour réaliser le feuilletage pendant le même cycle thermique.

L'EVA 15 épouse la surface de moulage et le câblage étant décalé du chant 51, 61 immerge l'entrée de câblage. L'EVA 10, 10' peut aussi venir en contact avec l'entrée de câblage et/ou la matière de protection.

Si le câblage est contre le vitrage, l'entrée de câblage est couverte au moins côté extérieur.

Dans une variante non représentée, on supprime les bandes d'EVA, on fait déborder les films 10 ,10' pour entourer le câble.

Le vitrage 100 montré en figure 4 est donc pourvu d'une étanchéité à l'eau liquide périphérique en EVA moulé 9 présentant une surface externe lisse.

Cela étanchéifie ainsi à la fois les clinquants et les soudures des câbles.

On a qualifié l'étanchéité à l'eau liquide par la détermination du deuxième chiffre de l'indice de protection (IP).

L'indice de protection (IP) est un standard international de la Commission Electrotechnique Internationale. Cet indice classe le niveau de protection qu'offre un matériau aux intrusions de corps solides et liquides. Le format de l'indice, donné par la norme CEI 60529, est IP XY, où les lettres XY sont deux chiffres et/ou une lettre. Lorsqu'aucun critère n'est rencontré, le chiffre peut être remplacé par la lettre X. Le deuxième chiffre Y renseigne donc sur le niveau de protection contre l'eau avec les conditions résumées dans le tableau 1 ci-dessous.

| **Indice** | **2^{ème} chiffre pour la Protection contre l'eau** |
|---|---|
| 0 | Aucune protection |
| 1 | Protégé contre les chutes verticales de gouttes d'eau |
| 2 | Protégé contre les chutes de gouttes d'eau jusqu'à 15° de la verticale |
| 3 | Protégé contre l'eau en pluie jusqu'à 60° de la verticale |
| 4 | Protégé contre les projections d'eau de toutes directions |
| 5 | Protégé contre les jets d'eau de toutes directions à la lance |
| 6 | Protégé contre les paquets de mer |
| 7 | Protégé contre les effets de l'immersion |

| | |
|---|---|
| Tableau 1 | |

Ce coefficient est défini par exemple dans les normes DIN40050, IEC 529, BS 5490.

Le vitrage 100 (comme tous les vitrages des exemples suivants selon l'invention) passe le standard IPX7, c'est-à-dire que le vitrage a été mis en fonctionnement en immersion totale dans l'eau (test décrit par la norme IEC 60335-1 :2002). Il s'agit d'une immersion temporaire entre 0,15 m et 1 m. Plus précisément l'essai est effectué en immergeant complètement le vitrage dans l'eau en position de service comme indiqué par le constructeur, de manière à ce que les conditions suivantes soient observées :
a) le vitrage est à 1 m de profondeur en position horizontale et alimenté électriquement,
b) la durée de l'essai est de 30 min,
c) la température de l'eau ne doit pas différer de celle du vitrage de plus de 5 K.

Les entrées des câbles noyées ont aussi une meilleure tenue. On peut valider la résistance à l'arrachement du câble par la méthode suivante.

Une marque est faite sur le câble à la sortie du moulage pendant qu'il est soumis à une force de traction de 100 N (10 kg) à une distance d'environ 20 mm de l'entrée de câble. Le câble est soumis à une traction de 100 N pendant 1s sans secousse dans la direction la plus défavorable. L'essai est effectué 25 fois. Puis le câble est soumis à un couple de torsion de 0,35 N.m appliqué le plus près possible de l'entrée du vitrage pendant 1 min. Pendant les essais le câble ne doit pas être endommagé, c'est à-dire sectionné par la torsion. La force de traction est de nouveau appliquée et on ne doit pas avoir de déplacement longitudinal du câble de plus de 2 mm.

Dans une deuxième réalisation, le procédé de fabrication présenté en figure 5 diffère de la première réalisation en ce que le câble 7 est inséré dans une gorge périphérique 53 obtenue par un décrochement de la face interne du premier verre 5. Les languettes 8 se terminent également dans cette gorge, ne dépassent pas du chant du vitrage dans cette configuration. Et le moule 40' n'a pas de décrochements internes.

On utilise par exemple moins de bandes EVA 15 pour l'étanchéité, par exemple deux bandes. De préférence on conserve une surface de moulage en regard des chants du vitrage mais l'épaisseur du débord du vitrage 200 obtenue dans cette deuxième réalisation, et montrée en figure 5bis est réduite.

Dans une variante non représentée, on insère le moule entre les faces internes des verres 5, 6.

Dans une troisième réalisation, le procédé de fabrication présenté en figure 6 diffère de la première réalisation en ce que le moule de section en L, est ouvert, donc seulement sur un bord de la face externe principale de la première feuille 5. Une enveloppe (bande de tissu adhésivée par exemple ou fixée par des scotchs) est disposée sur un bord de la face externe principale de la deuxième feuille et s'étend sur le moule 40" pour le capoter.

Pour l'ensemble des vues de dessus présentées ci-après la feuille de verre 6 et l'intercalaire 10' sont supprimées pour plus de clarté.

La figure 6bis représente une vue partielle et schématique de dessus (du côté du deuxième support 2') du vitrage à cristaux liquides feuilleté et étanche à l'eau 210 du troisième mode de réalisation selon l'invention (après l'opération de feuilletage, avant le retrait du moule) notamment pour illustrer l'étanchéité des deux entrées de câblage et l'arrangement des connectiques.

Les premier et deuxième bus bar 81, 82 sont le long d'un même bord par exemple bord latéral après installation respectivement localisé dans la zone de découpe du deuxième support et du film de cristaux liquides et localisé dans la zone de découpe (en pointillés) du premier support et du film de cristaux liquides.

Les première et deuxième languettes de laiton 8, 8' sont espacées par exemple de 15 cm (à peu près comme les extrémités en regard des bus bars).

Le moule ouvert 40" est en regard des deux entrées 70, 71 du câble bi-brins 7 sur les languettes 8,8' La matière de protection 9 couvre donc de manière continue, ces entrées et les languettes 8, 8' et l'espace entre ces languettes.

Le moule s'étendant un peu au delà des entrées 70, 71 et ainsi la matière de protection 9 couvre aussi une partie des gaines internes 71, 73 et l'extrémité de la gaine externe commune 74, favorisant le guidage du câble 7.

Le câble bi-brins sort du moule 40" par un seul côté (de part et d'autre d'un tissu latéral 42) et est unidirectionnel.

La figure 7 représente une vue partielle et schématique de dessus du vitrage à cristaux liquides feuilleté et étanche à l'eau 300 d'un quatrième mode de réalisation selon l'invention (après l'opération de feuilletage, avant le retrait du moule) notamment pour illustrer l'étanchéité des deux entrées de câblage et l'arrangement des connectiques.

Les premier et deuxième bus bar 81, 82 sont le long de deux bords opposés des chants 51, 61, par exemple bords latéraux après installation, le premier bus bar 81 étant localisé dans une zone de découpe du deuxième support et du film de cristaux liquides et le deuxième bus bar 82 étant localisé dans une zone de découpe (en pointillés) du premier support et du film de cristaux liquides.

Le moule 40 s'étend le long d'un bord adjacent de ces deux bords des chants 51, 61, par exemple le bord supérieur après installation.

Le moule de section en U est en regard des deux entrées 70, 71 du câble bi-brins 7 sur les languettes 8, 8' dépassantes sur ce bord supérieur. La matière de protection (9) couvre donc de manière continue, ces entrées et les languettes 8, 8' et l'espace entre ces languettes. Le moule est percé pour la sortie de la gaine externe 74 du câble bi-brins vers l'alimentation électrique (secteur ...).

La matière de protection 9 couvre aussi les gaines internes 71, 73 dénudées et l'extrémité de la gaine externe commune 74.

Le câble bi-brins en sortie du moule 40 est unidirectionnel.

La figure 7bis représente une vue partielle et schématique de dessus du vitrage à cristaux liquides feuilleté et étanche à l'eau 310 d'un cinquième mode de réalisation selon l'invention (après l'opération de feuilletage, après retrait du moule) notamment pour illustrer l'étanchéité des deux entrées de câblage et l'arrangement des connectiques.

Les premier et deuxième bus bar 81, 82 sont le long d'un seul bord des chants 51, 61, par exemple bord supérieur après installation, le premier bus bar 81 étant localisé dans une zone de découpe du deuxième support et du film de cristaux liquides et le deuxième bus bar 82 étant localisé dans une zone de découpe (en pointillés) du premier support et du film de cristaux liquides.

La matière de protection 9 couvre de manière continue, les entrées du câble bi-brins et les languettes 8, 8' et l'espace entre ces languettes. Le moule est percé pour la sortie de la gaine externe 74 du câble bi-brins vers l'alimentation électrique (secteur ...).

La matière de protection 9 couvre aussi les gaines internes dénudées 71, 73 et l'extrémité de la gaine externe commune 74.

Le câble bi-brins en sortie de l'EVA moulé 9 est unidirectionnel jusqu'à son branchement au secteur 75.

La figure 8 représente une vue schématique de dessus du vitrage à cristaux liquides feuilleté et étanche à l'eau 400 d'un sixième mode de réalisation selon l'invention (après l'opération de feuilletage, après retrait du moule) notamment pour illustrer l'étanchéité des deux entrées de câblage et l'arrangement des connectiques.

Ce vitrage 400 diffère du vitrage 210 par la configuration du câble notamment la gaine externe est courbée après l'EVA moulée et sort de l'EVA moulé par la surface moulée en regard du chant 1, 61.

La figure 9 représente une vue schématique de dessus du vitrage à cristaux liquides feuilleté et étanche à l'eau 500 d'un septième mode de réalisation selon l'invention (après l'opération de feuilletage, après retrait du moule) notamment pour illustrer l'étanchéité des deux entrées de câblage et l'arrangement des connectiques.

Ce vitrage 500 est similaire au vitrage 210 toutefois la surface de moulage est plus lisse en face supérieure car le moule utilisé est fermé, d'une seule pièce, en C.

La figure 10 représente une vue schématique de dessus du vitrage à cristaux liquides feuilleté et étanche à l'eau 600 d'un septième mode de réalisation selon l'invention (après l'opération de feuilletage, après retrait du moule) notamment pour illustrer l'étanchéité des deux entrées de câblage et l'arrangement des connectiques.

Ce vitrage 600 diffère du vitrage 500 par l'étendue du moulage, longeant l'ensemble du bord latéral et par l'écartement plus grand entre les languettes 8, 8' du fait de la position des bus bar 81, 82 le long des bords inférieur et supérieur.

La figure 11 représente une vue schématique de dessus du vitrage à cristaux liquides feuilleté et étanche à l'eau 700 d'un huitième mode de réalisation selon l'invention (après l'opération de feuilletage, après retrait du moule) notamment pour illustrer l'étanchéité des deux entrées de câblage et l'arrangement des connectiques.

Ce vitrage 700 est diffère du vitrage 600 par l'écartement réduit entre les languettes 8, 8' du fait de la position des bus bar 81, 82 le long du bord latéral (gauche).

La figure 12 représente une vue schématique de dessus d'un vitrage à cristaux liquides feuilleté et étanche à l'eau 800 d'un dixième mode de réalisation selon l'invention.

Ce vitrage 800 est diffère du vitrage 600 :
- par la position des bus bars 81, 82 sur deux zones disjointes de deux bords opposés latéraux,
- par la position des languettes 8, 8' sur le bord supérieur et sur le bord latéral respectivement,
- par la position du deuxième brin 72 avec sa gaine interne 73 sur le bord supérieur,
- par l'EVA moulé sur le bord latéral et le bord supérieur du chant 51, 61 du vitrage.

La figure 13 représente une vue partielle et schématique en coupe latérale de la fabrication d'un vitrage à cristaux liquides feuilleté et étanche à l'eau dans un onzième mode de réalisation selon l'invention.

Le procédé de fabrication présenté en figure 13 diffère de la première réalisation en ce que le moule ceinture entièrement le vitrage

Ainsi même les zones de chant sans câblage sont en EVA moulée. Dans ces zones, on peut utiliser moins d'EVA par exemple une seule bande d'EVA de 0,4 mm d'épaisseur.

La figure 13bis représente une vue partielle et schématique en coupe latérale du vitrage à cristaux liquides feuilleté et étanche à l'eau dans ce onzième mode de réalisation. L'EVA moulé 9 rejoint l'EVA de feuilletage 10, 10'.

La figure 14 représente une vue schématique de dessus du vitrage à cristaux liquides feuilleté et étanche à l'eau de ce onzième mode de réalisation selon l'invention montrant l'EVA moulé ceinturant le vitrage et d'épaisseur variable.

La figure 15 représente une vue schématique de dessus de la fabrication du vitrage à cristaux liquides feuilleté et étanche à l'eau du onzième mode de réalisation selon l'invention.

Le moule 40 en quatre morceaux chacun avec une extrémité latérale libre et une extrémité en butée contre une extrémité d'un autre morceau.

La figure 16 représente une vue partielle et schématique en coupe latérale de la fabrication d'un vitrage à cristaux liquides feuilleté et étanche à l'eau dans un douzième mode de réalisation selon l'invention

Ce procédé varie du procédé de la figure 13 en ce que, en zone hors câble, on n'ajoute pas d'EVA entre la surface interne de moulage 40 et le chant 51, 61.

La figure 16bis représente une vue partielle et schématique en coupe latérale du vitrage à cristaux liquides feuilleté et étanche à l'eau du douzième mode de réalisation selon l'invention.

Ce vitrage 700 diffère du vitrage 600 par un moulage affleurant des verres hors zone(s) de câblage et obtenu à partir des intercalaires de feuilletages 10, 10' seulement, en EVA.

## Revendications

1. Procédé de fabrication d'un vitrage feuilleté à diffusion variable par cristaux liquides (100, 200, 210, 300, 310, 400, 500, 600, 700, 800, 900, 910) dans lequel :
- on fournit une structure comprenant :
- une première feuille de verre (5),
- un premier film intercalaire de feuilletage (10) en une première matière thermoplastique,
- un système électrocommandable à diffusion variable comportant les cristaux liquides (1) entre un premier support (2) d'une première électrode (3) et un deuxième support (2') d'une deuxième électrode (4), les première et deuxième électrodes étant en contact avec les cristaux liquides,
- un deuxième film intercalaire de feuilletage (10) en une deuxième matière thermoplastique, notamment du type de la première,
- une deuxième feuille de verre (6),
- un câblage électrique d'alimentation électrique (7) avec une première entrée de câblage (70) liée à une première connectique (8) de la première électrode et une deuxième entrée de câblage (71) liée à une deuxième connectique (8') de la deuxième électrode,
- on forme un moyen d'étanchéité à l'eau liquide, voire vapeur, des première et deuxième connectiques d'électrodes et des première et deuxième entrées de câblage par les étapes suivantes :
- on insère une matière polymérique thermoplastique de protection dans un moule de surface interne, dite de moulage en regard des première et deuxième entrées de câblage,
- on place l'ensemble dans un système étanche au vide, on procède à un chauffage fluidifiant la matière polymérique thermoplastique de protection de sorte que la matière polymérique thermoplastique de protection épouse la surface de moulage et entre en contact avec les première et deuxième feuilles de verre, ledit chauffage fluidifiant en outre la première et la deuxième matière thermoplastique pour réaliser le feuilletage pendant le même cycle thermique, la matière polymérique thermoplastique de protection entrant en contact avec les première et deuxième matières thermoplastiques et formant ainsi une continuité de matière(s) avec les première et deuxième matières thermoplastiques.

2. Procédé de fabrication du vitrage feuilleté à diffusion variable par cristaux liquides (100, 200, 210, 300, 310, 400, 500, 600, 700, 800, 900, 910) selon la revendication précédente de procédé **caractérisé en ce que** la matière polymérique thermoplastique de protection est à base d'éthylène-vinyl acétate notamment réticulable et les première et la deuxième matières thermoplastiques sont à base d'éthylène-vinyl acétate.

3. Procédé de fabrication du vitrage feuilleté à diffusion variable par cristaux liquides (100, 200, 210, 300, 310, 400, 500, 600, 700, 800, 900, 910) selon l'une des revendications précédentes de procédé **caractérisé en ce que** le moule est le long du chant du vitrage et en appui sur le vitrage au moins par une face externe de la première feuille et éventuellement en butée contre le chant du vitrage.

4. Procédé de fabrication du vitrage feuilleté à diffusion variable par cristaux liquides (200) selon l'une des revendications précédentes de procédé **caractérisé en ce que** le moule ceinture le pourtour du vitrage.

5. Procédé de fabrication du vitrage feuilleté à diffusion variable par cristaux liquides (100, 200, 210, 300, 310, 400, 500, 600, 700, 800, 900, 910) selon l'une des revendications précédentes de procédé **caractérisé en ce que** le moule est ouvert ou percé de trou(s) sur sa paroi en regard du chant du vitrage pour sortir le câblage.

6. Procédé de fabrication du vitrage feuilleté à diffusion variable par cristaux liquides (100, 200, 210, 300, 310, 400, 500, 600, 700, 800, 900, 910) selon l'une des revendications précédentes de procédé **caractérisé en ce que** le moule est ouvert latéralement sur au moins un côté pour sortir le câblage, et de préférence les bords latéraux du moule sont obturés notamment par du tissu ou du scotch.

7. Procédé de fabrication du vitrage feuilleté à diffusion variable par cristaux liquides (100, 200, 210, 300, 310, 400, 500, 600, 700, 800, 900, 910) selon l'une des revendications précédentes de procédé **caractérisé en ce que** le moule est en appui par les faces externes principales du vitrage.

8. Procédé de fabrication du vitrage feuilleté à diffusion variable par cristaux liquides (210) selon l'une des revendications précédentes de procédé **caractérisé en ce que** le moule est en appui seulement sur un bord de la face externe principale de la première feuille et une enveloppe est disposée sur un bord de la face externe principale de la deuxième feuille et s'étend sur le moule.

9. Procédé de fabrication du vitrage feuilleté à diffusion variable par cristaux liquides selon l'une des revendications précédentes de procédé **caractérisé en ce que** le moule présente une section sensiblement en C.

10. Procédé de fabrication du vitrage feuilleté selon l'une des revendications précédentes de procédé **caractérisé en ce**
**que** la matière polymérique thermoplastique de protection est formée à partir du premier film intercalaire (10) débordant de la première feuille de verre (4) et éventuellement du deuxième film intercalaire (11) débordant de la deuxième feuille de verre (5).

11. Vitrage feuilleté à diffusion variable (100, 200, 210, 300,310, 400, 500, 600, 700, 800, 900, 910) par cristaux liquides qui peut être obtenu par le procédé de fabrication selon l'une des revendications précédentes de procédé, ce vitrage feuilleté comprenant :
- une première feuille de verre (5),
- un premier film intercalaire de feuilletage (10) de la première feuille de verre, en une première matière thermoplastique,
- un système électrocommandable à diffusion variable (20) comportant les cristaux liquides (1) entre un premier support (2) d'une première électrode (3) et un deuxième support (2') d'une deuxième électrode (4), les première et deuxième électrodes étant en contact avec les cristaux liquides,
- un deuxième film intercalaire de feuilletage (10') en une deuxième matière thermoplastique, notamment du type de la première, d'une deuxième feuille de verre (6),
- des première et deuxième connectiques (8, 8') respectivement de la première et de la deuxième électrode,
- un câblage électrique (7) avec deux entrées de câblage (70, 71) une première entrée de câblage (70) liée à la première connectique et une deuxième entrée de câblage (71) liée à la deuxième connectique,
- une matière polymérique thermoplastique de protection des première et deuxième entrées de câblage, en contact avec les première et deuxième feuilles de verre,
- un moyen d'étanchéité à l'eau des cristaux liquides et des première et deuxième électrodes,
**caractérisé en ce que** la première matière thermoplastique et la deuxième matière thermoplastique sont prolongées par la matière polymérique thermoplastique de protection (9) formant ainsi une continuité de matière(s) et formant ainsi le moyen d'étanchéité à l'eau liquide, voire vapeur, des première et deuxième connectiques d'électrodes et des première et deuxième entrées de câblage.

12. Vitrage feuilleté (100, 200, 210, 300, 310, 400, 500, 600, 700, 800, 900, 910) selon la revendication précédente de vitrage **caractérisé en ce que** la matière polymérique thermoplastique de protection (9) est réticulée.

13. Vitrage feuilleté (100, 200, 210, 300, 310, 400, 500, 600, 700, 800, 900, 910) selon l'une des revendications précédentes de vitrage **caractérisé en ce que** la matière polymérique thermoplastique de protection (9) est à base d'éthylène-vinyl acétate, notamment réticulée et de préférence la première matière et la deuxième matière thermoplastique (10) sont à base d'éthylène-vinyl acétate.

14. Vitrage feuilleté (100, 200, 210, 300, 310, 400, 500, 600, 700, 800, 900, 910) selon l'une des revendications précédentes de vitrage **caractérisé en ce que** la matière polymérique thermoplastique de protection (9) présente une surface dite externe (9a) orientée vers l'extérieur du vitrage qui est moulée.

15. Vitrage feuilleté (100, 200, 310, 800, 900, 910) selon l'une des revendications précédentes de vitrage **caractérisé en ce que** le câblage électrique (7) comprend un câble qui sur au moins une partie de sa longueur située au-delà d'une zone d'entrée du câble comporte une gaine en contact avec la matière polymérique thermoplastique de protection (9) et figée par la matière polymérique thermoplastique de protection voire par la première et/ou deuxième matière thermoplastique, notamment une gaine en polychlorure de vinyle.

16. Vitrage feuilleté (100, 310, 800, 900, 910) selon l'une des revendications précédentes de vitrage **caractérisé en ce que** le câblage électrique (7) comprend un câble s'étendant le long du chant du vitrage, notamment le long d'un seul bord de chant, et **en ce que** sur au moins une partie de sa longueur située au delà d'une zone d'entrée du câble, le câble, avec ou sans gaine externe (74), est recouvert de ladite matière polymérique thermoplastique de protection (9) voire dans la première et/ou la deuxième matière thermoplastique.

17. Vitrage feuilleté (200) selon l'une des revendications précédentes de vitrage **caractérisé en**
**ce que** le câblage électrique comprend un câble (7) s'étendant le long d'une gorge périphérique (53) entre les première et deuxième feuilles de verre, et **en ce que** sur au moins une partie de sa longueur située au-delà de la zone d'entrée du câble, le câble, avec ou sans gaine externe, est recouvert, de ladite matière polymérique thermoplastique de protection (9) voire de la première et/ou la deuxième matière thermoplastique.

18. Vitrage feuilleté (100, 200, 210, 300, 310, 500, 600, 700, 800, 900, 910) selon l'une des revendications précédentes de vitrage **caractérisé en ce que** le câblage électrique (7) comporte un câble fixé dans une position déterminée unidirectionnelle au moins en dehors de l'entrée du câble couverte de la matière polymérique thermoplastique de protection.

19. Vitrage feuilleté (100, 200, 210, 300, 310, 400, 500, 600, 700, 800, 900, 910) selon l'une des revendications précédentes de vitrage **caractérisé en ce que** la matière polymérique thermoplastique de protection (9) voire la première et/ou la deuxième matière thermoplastique couvre de manière continue les première et deuxième connectiques (8, 8') et l'espace entre les première et deuxième connectiques, connectiques notamment sous forme de bandes conductrices dépassantes du vitrage et de préférence sur un seul bord du vitrage.

20. Vitrage feuilleté (100, 200, 210, 300, 310, 400, 500, 600, 700, 800, 900, 910) selon l'une des revendications précédentes de vitrage **caractérisé en ce que** le câblage (74) sort du vitrage, sans couverture par la matière polymérique thermoplastique de protection, dans une unique zone notamment une zone d'un seul bord du chant, et de préférence le câblage est constitué d'un unique câble bi-brins (70,72).

21. Vitrage feuilleté (100, 200, 210, 300, 310, 400, 500, 600, 700, 800, 900, 910) selon l'une des revendications précédentes de vitrage **caractérisé en ce que** la matière polymérique thermoplastique de protection (9) est le long d'au moins un bord du chant (51, 61) et/ou le long d'une gorge périphérique (53) entre les première et deuxième feuilles de verre.

22. Vitrage feuilleté (310) selon l'une des revendications précédentes de vitrage **caractérisé en ce que** la matière polymérique thermoplastique de protection est sur tout le pourtour du chant du vitrage et la matière polymérique thermoplastique de protection est de préférence exempte d'un entourage externe, et/ou la matière de protection est dans une gorge périphérique entre les première et deuxième feuilles de verre encadrant le vitrage et incluant le câblage.

23. Utilisation du vitrage feuilleté à diffusion variable par cristaux liquides (100, 200, 210, 300,310, 400, 500, 600, 700, 800, 900, 910) selon l'une des revendications précédentes de vitrage comme :
- cloison interne dans un bâtiment, dans un moyen de locomotion terrestre, aérien, aquatique,
- porte vitrée, fenêtre, plafond, dallage,
- rétroviseur de véhicule, vitrage latéral, toit d'un moyen de locomotion terrestre, aérien, aquatique,
- écran de projection,
- façade de magasin, vitrine notamment d'un guichet.

## Patentansprüche

1. Verfahren zur Herstellung einer Verbundverglasung mit variabler Diffusion durch Flüssigkristalle (100, 200, 210, 300, 310, 400, 500, 600, 700, 800, 900, 910) bei dem:
- eine Struktur bereitgestellt wird, umfassend:
- eine erste Glasscheibe (5),
- eine erste Zwischenlaminierungsschicht (10) aus einem ersten thermoplastischen Material,
- ein elektrisch steuerbares System mit variabler Diffusion, umfassend die Flüssigkristalle (1) zwischen einem ersten Träger (2) einer ersten Elektrode (3) und einem zweiten Träger (2') einer zweiten Elektrode (4), wobei die erste und die zweite Elektrode mit den Flüssigkristallen in Kontakt sind,
- eine zweite Zwischenlaminierungsschicht (10) aus einem zweiten thermoplastischen Material, insbesondere vom Typ des ersten,
- eine zweite Glasscheibe (6),
- eine elektrische Verkabelung zur elektrischen Versorgung (7) mit einem ersten Kabeleingang (70), der mit einem ersten Anschluss (8) der ersten Elektrode verbunden ist, und einen zweiten Kabeleingang (71), der mit einem zweiten Anschluss (8') der zweiten Elektrode verbunden ist,
- ein Mittel zur Abdichtung gegen flüssiges Wasser bzw. sogar Dampf der ersten und zweiten Elektrodenanschlüsse und der ersten und zweiten Kabeleingänge durch die folgenden Schritte gebildet wird:
- Einsetzen eines thermoplastischen Polymerschutzmaterials in eine Form mit einer inneren Oberfläche, genannt Formoberfläche, gegenüber den ersten und zweiten Kabeleingängen,
- Anordnen der Gesamtheit in einem vakuumdichten System, Erhitzen, wodurch das thermoplastische Polymerschutzmaterial verflüssigt wird, so dass sich das thermoplastische Polymerschutzmaterial an die Formoberfläche anlegt und mit der ersten und der zweiten Glasscheibe in Kontakt kommt, wobei das Erhitzen ferner das erste und das zweite thermoplastische Material verflüssigt, um das Laminieren während desselben Wärmezyklus durchzuführen, wobei das thermoplastische Polymerschutzmaterial mit dem ersten und dem zweiten thermoplastischen Material in Kontakt kommt und so eine Materialdurchgängigkeit mit dem ersten und dem zweiten thermoplastischen Material bildet.

2. Verfahren zur Herstellung der Verbundverglasung mit variabler Diffusion durch Flüssigkristalle (100, 200, 210, 300, 310, 400, 500, 600, 700, 800, 900, 910) nach dem vorhergehenden Verfahrensanspruch, **dadurch gekennzeichnet, dass** das thermoplastische Polymerschutzmaterial auf Basis von insbesondere vernetzbarem Ethylen-Vinylacetat ist, und das erste und das zweite thermoplastische Material auf Basis von Ethylen-Vinylacetat sind.

3. Verfahren zur Herstellung der Verbundverglasung mit variabler Diffusion durch Flüssigkristalle (100, 200, 210, 300, 310, 400, 500, 600, 700, 800, 900, 910) nach einem der vorhergehenden Verfahrensansprüche, **dadurch gekennzeichnet, dass** die Form entlang der Kante der Verglasung und auf der Verglasung mit mindestens einer Außenseite der ersten Scheibe aufliegend und eventuell an der Kante der Verglasung anschlagend ist.

4. Verfahren zur Herstellung der Verbundverglasung mit variabler Diffusion durch Flüssigkristalle (200) nach einem der vorhergehenden Verfahrensansprüche, **dadurch gekennzeichnet, dass** die Form den Umfang der Verglasung umgibt.

5. Verfahren zur Herstellung der Verbundverglasung mit variabler Diffusion durch Flüssigkristalle (100, 200, 210, 300, 310, 400, 500, 600, 700, 800, 900, 910) nach einem der vorhergehenden Verfahrensansprüche, **dadurch gekennzeichnet, dass** die Form auf ihrer der Kante der Verglasung gegenüberliegenden Wand offen oder mit einem Loch (Löchern) versehen ist, um die Kabel durchzulassen.

6. Verfahren zur Herstellung der Verbundverglasung mit variabler Diffusion durch Flüssigkristalle (100, 200, 210, 300, 310, 400, 500, 600, 700, 800, 900, 910) nach einem der vorhergehenden Verfahrensansprüche, **dadurch gekennzeichnet, dass** die Form seitlich auf mindestens einer Seite offen ist, um die Kabel durchzulassen, und dass vorzugsweise die Seitenränder insbesondere durch Stoff oder Scotch verschlossen sind.

7. Verfahren zur Herstellung der Verbundverglasung mit variabler Diffusion durch Flüssigkristalle (100, 200, 210, 300, 310, 400, 500, 600, 700, 800, 900, 910) nach einem der vorhergehenden Verfahrensansprüche, **dadurch gekennzeichnet, dass** die Form an den Hauptaußenseiten der Verglasung aufliegt.

8. Verfahren zur Herstellung der Verbundverglasung mit variabler Diffusion durch Flüssigkristalle (210) nach einem der vorhergehenden Verfahrensansprüche, **dadurch gekennzeichnet, dass** die Form nur auf einem Rand der Hauptaußenseite der ersten Scheibe aufliegt und eine Hülle auf einem Rand der Hauptaußenseite der zweiten Scheibe angeordnet ist und sich auf der Form erstreckt.

9. Verfahren zur Herstellung der Verbundverglasung mit variabler Diffusion durch Flüssigkristalle nach einem der vorhergehenden Verfahrensansprüche, **dadurch gekennzeichnet, dass** die Form einen im Wesentlichen C-förmigen Querschnitt aufweist.

10. Verfahren zur Herstellung der Verbundverglasung nach einem der vorhergehenden Verfahrensansprüche, **dadurch gekennzeichnet, dass** das thermoplastische Polymerschutzmaterial aus der ersten Zwischenschicht (10), die über die erste Glasscheibe (4) überstehend ist, und eventuell aus der zweiten Zwischenschicht (11), die über die zweite Glasscheibe (5) überstehend ist, gebildet ist.

11. Verbundverglasung mit variabler Diffusion durch Flüssigkristalle (100, 200, 210, 300, 310, 400, 500, 600, 700, 800, 900, 910), die durch das Herstellungsverfahren nach einem der vorhergehenden Verfahrensansprüche erhalten werden kann, wobei diese Verbundverglasung umfasst:
- eine erste Glasscheibe (5),
- eine erste Zwischenlaminierungsschicht (10) der ersten Glasscheibe aus einem ersten thermoplastischen Material,
- ein elektrisch steuerbares System mit variabler Diffusion (20), umfassend die Flüssigkristalle (1) zwischen einem ersten Träger (2) einer ersten Elektrode (3) und einem zweiten Träger (2') einer zweiten Elektrode (4), wobei die erste und die zweite Elektrode mit den Flüssigkristallen in Kontakt sind,
- eine zweite Zwischenlaminierungsschicht (10') aus einem zweiten thermoplastischen Material, insbesondere vom Typ des ersten, einer zweiten Glasscheibe (6),
- erste und zweite Anschlüsse (8, 8') der ersten bzw. der zweiten Elektrode,
- eine elektrische Verkabelung (7) mit zwei Kabeleingängen (70, 71), einem ersten Kabeleingang (70), der mit einem ersten Anschluss verbunden ist, und einen zweiten Kabeleingang (71), der mit einem zweiten Anschluss verbunden ist,
- ein thermoplastisches Polymerschutzmaterial zum Schutz der ersten und zweiten Kabeleingänge, das mit der ersten und zweiten Glasscheibe in Kontakt ist,
- ein Mittel zum Abdichten der Flüssigkristalle und der ersten und zweiten Elektroden gegen Wasser,
**dadurch gekennzeichnet, dass** das erste thermoplastische Material und das zweite thermoplastische Material durch das thermoplastische Polymerschutzmaterial (9) verlängert sind, wodurch eine Materialdurchgängigkeit gebildet wird und auf diese Weise die Abdichtung gegen flüssiges Wasser bzw. Dampf der ersten und zweiten Elektrodenanschlüsse und der ersten und zweiten Kabeleingänge verwirklicht wird.

12. Verbundverglasung (100, 200, 210, 300, 310, 400, 500, 600, 700, 800, 900, 910) nach dem vorhergehenden Verglasungsanspruch, **dadurch gekennzeichnet, dass** das thermoplastische Polymerschutzmaterial (9) vernetzt ist.

13. Verbundverglasung (100, 200, 210, 300, 310, 400, 500, 600, 700, 800, 900, 910) nach einem der vorhergehenden Verglasungsansprüche, **dadurch gekennzeichnet, dass** das thermoplastische Polymerschutzmaterial (9) auf Basis von insbesondere vernetztem Ethylen-Vinylacetat ist, und dass vorzugswiese das erste und das zweite thermoplastische Material (10) auf Basis von Ethylen-Vinylacetat ist.

14. Verbundverglasung (100, 200, 210, 300, 310, 400, 500, 600, 700, 800, 900, 910) nach einem der vorhergehenden Verglasungsansprüche, **dadurch gekennzeichnet, dass** das thermoplastische Polymerschutzmaterial (9) eine so genannte Außenseite (9a) aufweist, die nach außen zur Verglasung gerichtet ist und geformt ist.

15. Verbundverglasung (100, 200, 310, 800, 900, 910) nach einem der vorhergehenden Verglasungsansprüche, **dadurch gekennzeichnet, dass** die elektrische Verkabelung (7) ein Kabel umfasst, das auf mindestens einem Teil seiner Länge, der sich über eine Kabeleingangszone hinaus erstreckt, einen Mantel umfasst, der mit dem thermoplastischen Polymerschutzmaterial (9) in Kontakt ist und durch das thermoplastische Polymerschutzmaterial bzw. sogar durch das erste und/oder zweite thermoplastische Material starr ist, insbesondere einen Mantel aus Polyvinylchlorid.

16. Verbundverglasung (100, 310, 800, 900, 910) nach einem der vorhergehenden Verglasungsansprüche, **dadurch gekennzeichnet, dass** die elektrische Verkabelung (7) ein Kabel umfasst, das sich entlang der Kante der Verglasung erstreckt, insbesondere entlang eines einzigen Randes der Kante, und dass auf mindestens einem Teil ihrer Länge, der sich über eine Kabeleingangszone hinaus befindet, das Kabel mit oder ohne Außenmantel (74) mit dem thermoplastischen Polymerschutzmaterial (9) bzw. dem ersten und/oder zweiten thermoplastischen Material bedeckt ist.

17. Verbundverglasung (200) nach einem der vorhergehenden Verglasungsansprüche, **dadurch gekennzeichnet, dass** die elektrische Verkabelung ein Kabel (7) umfasst, das sich entlang einer Umfangsrille (53) zwischen den ersten und zweiten Glasscheiben erstreckt, und dass auf mindestens einem Teil ihrer Länge, die sich über die Kabeleingangszone hinaus erstreckt, das Kabel mit oder ohne Außenmantel mit dem thermoplastischen Polymerschutzmaterial (9) bzw. dem ersten und/oder zweiten thermoplastischen Material bedeckt ist.

18. Verbundverglasung (100, 200, 210, 300, 310, 500, 600, 700, 800, 900, 910) nach einem der vorhergehenden Verglasungsansprüche, **dadurch gekennzeichnet, dass** die elektrische Verkabelung (7) ein Kabel umfasst, das in einer bestimmten unidirektionalen Position zumindest außerhalb des Eingangs des Kabels, der mit thermoplastischem Polymerschutzmaterial bedeckt ist, befestigt ist.

19. Verbundverglasung (100, 200, 210, 300, 310, 400, 500, 600, 700, 800, 900, 910) nach einem der vorhergehenden Verglasungsansprüche, **dadurch gekennzeichnet, dass** das thermoplastische Polymerschutzmaterial (9) bzw. das erste und/oder das zweite thermoplastische Material durchgehend die ersten und zweiten Anschlüsse (8, 8') und den Raum zwischen den ersten und zweiten Anschlüssen bedeckt, Anschlüsse insbesondere in Form von leitenden Streifen, die - vorzugsweise nur an einem Rand der Verglasung - über die Verglasung hinausgehen.

20. Verbundverglasung (100, 200, 210, 300, 310, 400, 500, 600, 700, 800, 900, 910) nach einem der vorhergehenden Verglasungsansprüche, **dadurch gekennzeichnet, dass** die Verkabelung (74) aus der Verglasung, ohne mit dem thermoplastischen Polymerschutzmaterial bedeckt zu sein, in einer einzigen Zone austritt, insbesondere einer Zone an einem einzigen Rand der Kante, und dass vorzugsweise die Verkabelung von einem einzigen zweisträngigen Kabel (70, 72) gebildet ist.

21. Verbundverglasung (100, 200, 210, 300, 310, 400, 500, 600, 700, 800, 900, 910) nach einem der vorhergehenden Verglasungsansprüche, **dadurch gekennzeichnet, dass** das thermoplastische Polymerschutzmaterial (9) entlang mindestens eines Randes der Kante (51, 61) und/oder entlang einer Umfangsrille (53) zwischen den ersten und zweiten Glasscheiben vorgesehen ist.

22. Verbundverglasung (310) nach einem der vorhergehenden Verglasungsansprüche, **dadurch gekennzeichnet, dass** das thermoplastische Polymerschutzmaterial das thermoplastische auf dem gesamten Umfang der Kante der Verglasung ist, vorzugsweise frei von einer äußeren Einfassung ist, und/oder das Schutzmaterial in einer Umfangsrille zwischen den ersten und zweiten Glasscheiben, die die Verglasung umrahmt und die Verkabelung einschließt, vorgesehen ist.

23. Verwendung der Verbundverglasung mit variabler Diffusion durch Flüssigkristalle (100, 200, 210, 300, 310, 400, 500, 600, 700, 800, 900, 910) nach einem der vorhergehenden Verglasungsansprüche, als:
- innere Trennwand in einem Gebäude, in einem Fortbewegungsmittel auf der Erde, in der Luft, auf dem Wasser,
- Glastüre, Fenster, Decke, Bodenplatte,
- Fahrzeugspiegel, Seitenverglasung, Dach eines Fortbewegungsmittels auf der Erde, in der Luft, auf dem Wasser,
- Projektionsschirm,
- Geschäftsfassade, Vitrine, insbesondere eines Schalters.

## Claims

1. Process for manufacturing a laminated glazing (100, 200, 210, 300, 310, 400, 500, 600, 700, 800, 900, 910) with liquid-crystal-induced variable scattering, in which:
- a structure is provided comprising:
- a first glass sheet (5);
- a first lamination interlayer (10) made from a first thermoplastic material;
- an electrically controllable, variable scattering system comprising the liquid crystals (1) between a first support (2) of a first electrode (3) and a second support (2') of a second electrode (4), the first and second electrodes making contact with the liquid crystals;
- a second lamination interlayer (10) made from a second thermoplastic material, especially of the first type;
- a second glass sheet (6);
- electricity supply wiring (7) with a first wiring input (70) connected to a first link (8) of the first electrode and a second wiring input (71) connected to a second link (8') of the second electrode; and
- a means for sealing the first and second electrode links and the first and second wiring inputs from liquid water, even water vapour, is formed by the following steps:
- a protective thermoplastic polymer material is inserted into a mould having what is called an internal moulding surface facing the first and second wiring inputs;
- the assembly is placed in a sealed vacuum system, the protective thermoplastic polymer material is heated until fluid so that the protective thermoplastic polymer material follows closely the moulding surface and makes contact with the first and second glass sheets, said heating furthermore fluidizing the first and second thermoplastic materials so as to ensure the lamination during the same heat treatment, the protective thermoplastic polymer material making contact with the first and second thermoplastic materials and thus forming with the first and second thermoplastic materials a continuous length of material(s).

2. Process for manufacturing the laminated glazing (100, 200, 210, 300, 310, 400, 500, 600, 700, 800, 900, 910) with liquid-crystal-induced variable scattering, according to the preceding process claim, **characterized in that** the protective thermoplastic polymer material is based on ethylene-vinyl acetate, especially crosslinkable ethylene-vinyl acetate, and the first and second thermoplastic materials are based on ethylene-vinyl acetate.

3. Process for manufacturing the laminated glazing (100, 200, 210, 300, 310, 400, 500, 600, 700, 800, 900, 910) with liquid-crystal-induced variable scattering, according to one of the preceding process claims, **characterized in that** the mould lies along the edge of the glazing and presses against the glazing at least on an external face of the first sheet and optionally butts against the edge of the glazing.

4. Process for manufacturing the laminated glazing (200) with liquid-crystal-induced variable scattering, according to one of the preceding process claims, **characterized in that** the mould encircles the perimeter of the glazing.

5. Process for manufacturing the laminated glazing (100, 200, 210, 300, 310, 400, 500, 600, 700, 800, 900, 910) with liquid-crystal-induced variable scattering, according to one of the preceding process claims, **characterized in that** the mould is opened or pierced with one or more holes in its sidewall facing the edge of the glazing so as to let the wiring exit.

6. Process for manufacturing the laminated glazing (100, 200, 210, 300, 310, 400, 500, 600, 700, 800, 900, 910) with liquid-crystal-induced variable scattering, according to one of the preceding process claims, **characterized in that** the mould is opened laterally on at least one side so as to let the wiring exit, and preferably the lateral sides of the mould are obstructed, especially using a fabric or an adhesive tape.

7. Process for manufacturing the laminated glazing (100, 200, 210, 300, 310, 400, 500, 600, 700, 800, 900, 910) with liquid-crystal-induced variable scattering, according to one of the preceding process claims, **characterized in that** the mould presses against the main external faces of the glazing.

8. Process for manufacturing the laminated glazing (210) with liquid-crystal-induced variable scattering, according to one of the preceding process claims, **characterized in that** the mould only presses against one end of the main external face of the first sheet and a cover is placed on one edge of the main external face of the second sheet and extends over the mould.

9. Process for manufacturing the laminated glazing with liquid-crystal-induced variable scattering according to one of the preceding process claims, **characterized in that** the mould has a substantially C-shaped cross section.

10. Process for manufacturing the laminated glazing according to one of the preceding process claims, **characterized in that** the protective thermoplastic polymer material is formed from the first interlayer film (10) protruding from the first glass sheet (4) and optionally the second interlayer film (11) protruding from the second glass sheet (5).

11. Laminated glazing (100, 200, 210, 300, 310, 400, 500, 600, 700, 800, 900, 910) with variable liquid-crystal-induced scattering, which is able to be obtained by the manufacturing process according to one of the preceding process claims, this laminated glazing comprising:
- a first glass sheet (5);
- a first interlayer film (10) for laminating the first glass sheet, made from a first thermoplastic material;
- an electrically controllable, variable scattering system (20) comprising the liquid crystals (1) between a first support (2) for a first electrode (3) and a second support (2') for a second electrode (4), the first and second electrodes making contact with the liquid crystals;
- a second interlayer film (10'), made from a second thermoplastic material, especially of the first type, for laminating a second glass sheet (6);
- first and second links (8, 8'), to the first and second electrodes respectively;
- electrical wiring (7) with two wiring inputs (70, 71), a first wiring input (70) connected to the first link and a second wiring input (71) connected to the second link;
- a thermoplastic polymer material, for protecting the first and second wiring inputs, which makes contact with the first and second glass sheets; and
- a means for sealing the liquid crystals and the first and second electrodes from water,
**characterized in that** the first thermoplastic material and the second thermoplastic material are extended by the protective thermoplastic polymer material (9), this forming a continuous length of material(s) and thus forming the means for sealing the first and second electrode links and the first and second wiring inputs from liquid water, even water vapour.

12. Laminated glazing (100, 200, 210, 300, 310, 400, 500, 600, 700, 800, 900, 910) according to the preceding glazing claim, **characterized in that** the protective thermoplastic polymer material (9) is crosslinked.

13. Laminated glazing (100, 200, 210, 300, 310, 400, 500, 600, 700, 800, 900, 910) according to either one of the preceding glazing claims, **characterized in that** the protective thermoplastic polymer material (9) is based on ethylene-vinyl acetate, especially crosslinked ethylene-vinyl acetate, and preferably the first and the second thermoplastic materials (10) are based on ethylene-vinyl acetate.

14. Laminated glazing (100, 200, 210, 300, 310, 400, 500, 600, 700, 800, 900, 910) according to one of the preceding glazing claims, **characterized in that** the protective thermoplastic polymer material (9) has what is called an external surface (9a), directed towards the exterior of the glazing, which is moulded.

15. Laminated glazing (100, 200, 310, 800, 900, 910) according to one of the preceding glazing claims, **characterized in that** the electrical wiring (7) comprises a wire that, over at least some of its length located outside of an input region of the wire, comprises a sheath that makes contact with the protective thermoplastic polymer material (9) and that is held fast by the protective thermoplastic polymer material or even by the first and/or second thermoplastic material(s), especially a polyvinyl chloride sheath.

16. Laminated glazing (100, 310, 800, 900, 910) according to one of the preceding glazing claims, **characterized in that** the electrical wiring (7) comprises a wire that extends along the edge of the glazing, especially along only one edge face, and **in that**, over at least some of its length located outside of an input region of the wire, the wire, with or without an external sheath (74), is covered by said protective thermoplastic polymer material (9) and even by the first and/or the second thermoplastic material.

17. Laminated glazing (200) according to one of the preceding glazing claims, **characterized in that** the electrical wiring comprises a wire (7) that extends along a peripheral groove (53) between the first and second glass sheets, and **in that**, over at least some of its length located outside of the input region of the wire, the wire, with or without an external sheath, is covered by said protective thermoplastic polymer material (9) even by the first and/or second thermoplastic material.

18. Laminated glazing (100, 200, 210, 300, 310, 500, 600, 700, 800, 900, 910) according to one of the preceding glazing claims, **characterized in that** the electrical wiring (7) comprises a wire fixed in a defined unidirectional position at least outside of the input of the wire, said input being covered with the protective thermoplastic polymer material.

19. Laminated glazing (100, 200, 210, 300, 310, 400, 500, 600, 700, 800, 900, 910) according to one of the preceding glazingclaims, **characterized in that** the protective thermoplastic polymer material (9), even the first and/or the second thermoplastic material(s), cover(s) continuously the first and second links (8, 8') and the space between the first and second links, especially links in the form of conductive strips protruding from the glazing and preferably on a single edge of the glazing.

20. Laminated glazing (100, 200, 210, 300, 310, 400, 500, 600, 700, 800, 900, 910) according to one of the preceding glazing claims, **characterized in that** the wiring (74) exits the glazing, not covered by the protective thermoplastic polymer material, in a single region especially a region of a single edge face, and preferably the wiring is formed by a single two-wire (70, 72) cable.

21. Laminated glazing (100, 200, 210, 300, 310, 400, 500, 600, 700, 800, 900, 910) according to one of the preceding glazing claims, **characterized in that** the protective thermoplastic polymer material (9) lies along at least one edge face (51, 61), and/or along a peripheral groove (53) between the first and second glass sheets.

22. Laminated glazing (310) according to one of the preceding glazing claims, **characterized in that** the protective thermoplastic polymer material lies around the entire perimeter of the edge of the glazing and the protective thermoplastic polymer material preferably has no external surround, and/or the protective material lies in a peripheral groove between the first and second glass sheets, framing the glazing and enclosing the wiring.

23. Use of the laminated glazing (100, 200, 210, 300, 310, 400, 500, 600, 700, 800, 900, 910) with variable liquid-crystal-induced scattering, according to one of the preceding glazing claims, as:
- an internal partition in a building or in a terrestrial, aerial or nautical means of transportation;
- a glazed door, a window, a ceiling or tiling;
- a rear-view mirror of a vehicle, side windows or roof of a terrestrial, aerial or nautical means of transportation;
- a projector screen; or
- a shop window or a window of a counter.
